# EUROPEAN PATENT SPECIFICATION

(11) **EP 3 737 148 B1**
(45) Date of publication and mention of the grant of the patent: **15.10.2025**
(21) Application number: 18897929.8
(22) Date of filing: 14.12.2018
(51) Int. Cl.: H04L 41/0893, H04L 41/0895, H04L 41/0896, H04L 47/263, H04L 41/40, H04L 43/0876, H04L 43/20, H04L 43/16, H04L 47/2408

(54) **BANDWIDTH ADJUSTMENT METHOD AND APPARATUS**
VERFAHREN UND VORRICHTUNG ZUR BANDBREITENEINSTELLUNG
PROCÉDÉ ET APPAREIL DE RÉGLAGE DE BANDE PASSANTE

(30) Priority: 02.01.2018 CN 201810002515
(43) Date of publication of application: 11.11.2020
(73) Proprietor: China Mobile Communication Co., Ltd Research Institute, Beijing 100053 (CN); China Mobile Communications Group Co., Ltd, Beijing 100032 (CN)
(72) Inventor: CAI, Qian, Beijing 100032 (CN); LI, Han, Beijing 100032 (CN); WANG, Lei, Beijing 100032 (CN)
(74) Representative: GPI Brevets
(86) International application number: PCT/CN2018/121106
(87) International publication number: WO 2019/134489

(56) References cited:
- WO-A1-2017/150826
- CN-A- 104 301 256
- CN-A- 104 486 254
- CN-A- 104 580 018
- KR-A- 20170 033 179
- US-A1- 2016 112 335
- WANG YINGCHUN; GAO JUNSHI; LI YONG; CHEN XIAOMING: "Research on 5G Transport Network Bearing Solution", MOBILE COMMUNICATIONS, vol. 41, no. 20, 30 October 2017 (2017-10-30), pages 80 - 84, XP009522611, DOI: 10.3969/j.issn.1006-1010.2017.20.014

## Description

### CROSS-REFERENCE TO RELATED APPLICATION

The present application claims a priority of the Chinese patent application No.201810002515.3 filed on January 2, 2018.

### TECHNICAL FIELD

The present disclosure relates to the field of mobile communication technology, in particular to a bandwidth adjustment method and a bandwidth adjustment device.

### BACKGROUND

Along with the development of the mobile communication technology, a 5^{th}-Generation (5G) mobile communication network needs to support various services and application scenarios, e.g., an Enhanced Mobile Broadband (eMBB) service having a higher bandwidth and lower delay, a Massive Machine-Type Communication (mMTC) service that supports the connections among a huge amount of users, and an Ultra Reliable & Low Latency Communication (uRLLC) service. Predictably, in the era of 5G, many new user applications will be introduced, e.g., pervasive high-definition or ultra-high-definition movies or videos, or even three-dimensional (3D) holographic movies or videos in a dense urban, user experience at a high speed of 100Mbps at any place, mobile application at a high speed greater than 350km/h, sensor network, haptic Internet, E-Health, or natural disaster monitoring.

The 5G mobile network needs to support the transmission of difference types of services simultaneously, e.g., a large-bandwidth service, a low-latency service, a hard-isolated service, a flexibly-connected service, a uniformly-controlled service and a high-precision time-synchronized service. It is impossible for an existing 4G transmission technology to meet the 5G challenge, and a new slicing transmission mechanism is to be provided to support the transmission of the 5G services.

In the existing 4G transmission technology, when a Slicing Packet Network (SPN) link needs to adjust a bandwidth, it is necessary to configure the two ends of the SPN link via an Element Management System (EMS), so as to interrupt an existing link, and cancel an existing slot configuration. When the slot configuration has been updated, the two ends are enabled to be connected to each other, so as to achieve the flow recovery.

In a word, the bandwidth can merely be adjusted statically in the related art, resulting in an adverse effect on the existing data flow, and specifically a hidden trouble of flow interruption and loss.

WO2017150826A1 discloses an apparatus and a method for controlling bandwidth in consideration of traffic change in sdn-based virtual wireless network environment, comprising an OpenFlow module which is included in a host access point daemon (hostapd) of an OpenFlow access point (AP) and allows the OpenFlow AP to collect network traffic and dynamically control a bandwidth.

KR20170033179A discloses a method and apparatus for managing virtual network usage bandwidth, based on a SDN by monitoring the network usage state of virtual networks sharing a SDN resource.

### SUMMARY

The embodiments of the present disclosure provide a bandwidth adjustment method and a bandwidth adjustment device, as defined in accompanying claims, so as not to interrupt an existing link, thereby enabling prevention of the interruption and loss of data flow for customers, and further improving the transmission efficiency.

### BRIEF DESCRIPTION OF THE DRAWINGS

In order to illustrate the technical solutions of the present disclosure or the related art in a clearer manner, the drawings desired for the description of embodiments will be described hereinafter briefly. Obviously, the following drawings merely relate to some embodiments of the present disclosure, and based on these drawings, a person skilled in the art may obtain the other drawings without any creative effort.
Fig. 1 is a schematic view showing a structure of system for performing a bandwidth adjustment for SPN devices according to one embodiment of the present disclosure;
Fig. 2 is a schematic view showing the bandwidth adjustment performed by the SPN devices according to one embodiment of the present disclosure;
Fig. 3 is a schematic view showing the bandwidth adjustment negotiation performed by the SPN devices according to one embodiment of the present disclosure;
Fig. 4 is another schematic view showing a structure of system for performing a bandwidth adjustment for the SPN devices according to one embodiment of the present disclosure;
Fig. 5 is another schematic view showing the bandwidth adjustment performed by the SPN devices according to one embodiment of the present disclosure;
Fig. 6 is yet another schematic view showing the bandwidth adjustment performed by the SPN devices according to one embodiment of the present disclosure;
Fig. 7 is a schematic view showing the time-slot interchange performed by an SPN device in the middle of an SPN channel according to one embodiment of the present disclosure;
Fig. 8 is a schematic view showing a structure of an SDN device according to one embodiment of the present disclosure;
Fig. 9 is a schematic view showing a structure of a first SPN device at an end point of the SPN channel according to one embodiment of the present disclosure;
Fig. 10 is a schematic view showing a structure of a second SPN device in the middle of the SPN channel according to one embodiment of the present disclosure;
Fig. 11 is another schematic view showing a structure of an SDN device according to one embodiment of the present disclosure;
Fig. 12 is another schematic view showing a structure of a first SPN device at an end point of the SPN channel according to one embodiment of the present disclosure;
Fig. 13 is another schematic view showing a structure of a second SPN device in the middle of an SPN channel according to one embodiment of the present disclosure;
Fig. 14 is yet another schematic view showing a structure of an SDN device according to one embodiment of the present disclosure;
Fig. 15 is yet another schematic view showing a structure of a first SPN device at an end point of the SPN channel according to one embodiment of the present disclosure;
Fig. 16 is yet another schematic view showing a structure of a second SPN device in the middle of the SPN channel according to one embodiment of the present disclosure;
Fig. 17 is a flow chart of an SDN device side in the method for performing a bandwidth adjustment for SPN devices according to one embodiment of the present disclosure;
Fig. 18 is a flow chart of an first SPN device at an end point of the SPN channel in the method for performing a bandwidth adjustment for SPN devices according to one embodiment of the present disclosure; and
Fig. 19 is a flow chart of a second SPN device in the middle of the SPN channel in the method for performing a bandwidth adjustment for SPN devices according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

The embodiments of the present disclosure will be described hereinafter in conjunction with the drawings.

In the embodiments of the present disclosure, Slicing Packet Network (SPN) devices are classified into two types. As for the first type, the SPN devices are merely located at two ends of a same SPN channel, i.e., there are two SPN devices in the SPN channel. As for the second type, the SPN devices are located at the two ends, and also in the middle, of the same SPN channel, i.e., there are at least three SPN devices in the SPN channel. The two circumstances will be described hereinafter.

First scenario: the SPN devices are merely located at the two ends of the same SPN channel, i.e., there are two SPN devices in the SPN channel.

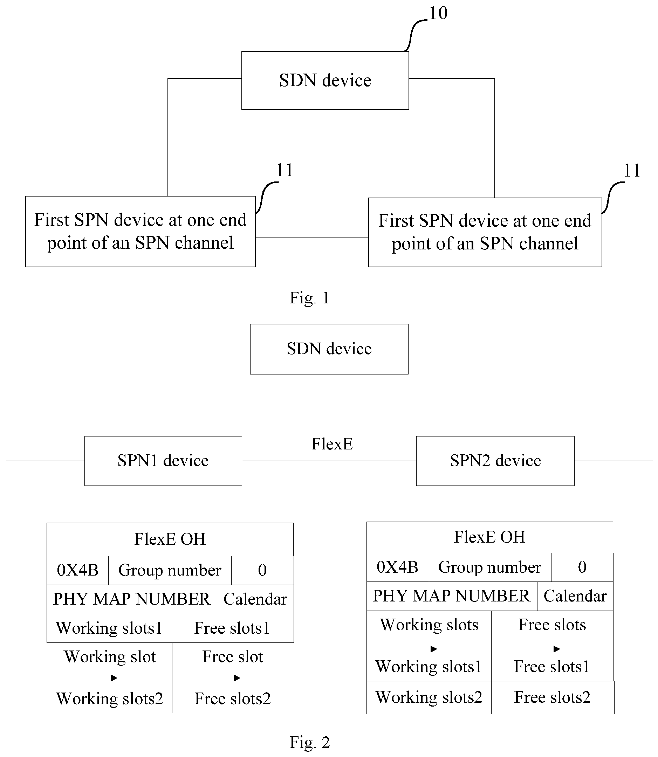

As shown in Fig. 1, when the SPN devices are merely located at the two ends of the same SPN channel, a system for performing a bandwidth adjustment for the SPN devices includes an SDN device 10, and first SPN devices 11 at two end points of the SPN channel.

The SDN device 10 is configured to determine whether the SPN devices in the same SPN channel need a bandwidth adjustment in accordance with SPN group information and port flow information reported by the SPN devices, and after determining that the bandwidth adjustment is needed, transmit bandwidth adjustment information to the SPN devices in the same SPN channel.

The first SPN devices 11 at the two end points of the SPN channel are configured to report the SPN group information and the port flow information for determining whether the bandwidth adjustment is to be performed, and after receiving the bandwidth adjustment information from the SDN device, adjust the bandwidth of link between the SPN devices connected to each other in the SPN channel in accordance with the bandwidth adjustment information.

In the embodiments of the present disclosure, each first SPN device reports the SPN group information and the port flow information for determining whether the bandwidth adjustment is to be performed. The SDN device determines whether the bandwidth adjustment is needed by the first SPN devices in the same SPN channel in accordance with the SPN group information and the port flow information reported by the SPN device, and after it is determined that the bandwidth adjustment is needed, transit the bandwidth adjustment information to the first SPN devices in the same SPN channel. After receiving the bandwidth adjustment information from the SDN device, each first SPN device adjusts the bandwidth of link between the first SPN devices connected to each other in the SPN channel in accordance with the bandwidth adjustment information. Owing to the dynamic adjustment of transmission slots and thus the needlessness of manual and static configuration of the transmission slots for two ends of the link via an EMS in the case where the bandwidth of link changes, it is unnecessary to interrupt an existing link thereby enabling prevention of the interruption and loss of data flow for customers.

In the embodiments of the present disclosure, existing SPN group information may be exchanged between the SPN devices through a Flex Ethernet (FlexE) overhead (OH). The SPN group information may include, but not limited to, some or all of a group number, a physical map number (PHY MAP NUMBER), a calendar, working slots and free slots.

The FlexE herein is an interfacing technology for service isolation bearing and network slicing via a bearer network, while OH is the overhead and a forefront portion of a data packet.

A purpose of exchanging the existing SPN group information between the SPN devices through the FlexE OH is to verify whether the SPN devices in the link belong to the same SPN channel. When the SPN group information of the SPN devices is the same, the SPN devices in the link belong to the same SPN channel.

The addition of working slots and free slots in the SPN group information is for the purpose of the subsequent determination on whether to add or delete slots, i.e., adjust the bandwidth by the SDN device.

Optionally, the first SPN devices at the end points of the SPN channel may report the SPN group information and the port flow information for determining whether the bandwidth adjustment is to be performed to the SDN device.

The end points herein may refer to a start point and a terminal point of the same SPN channel.

The SPN group information herein includes, but is not limited to, some or all of the group number, PHY MAP NUMBER, calendar, and working slots and free slots of the SPN.

The SDN device determines the SPN devices in the same SPN channel in accordance with the SPN group information reported by the SPN devices. For example, when the SPN group information includes the same group number, same configured PHY MAP NUMBER and same calendar, the SDN device determines that the SPN devices are in the same SPN channel.

The port flow information herein may refer to a size of a flow to pass through the SPN channel.

Optionally, the SDN device may determine whether the first SPN devices in the same SPN channel need the bandwidth adjustment in accordance with the SPN group information and the port flow information reported by the SPN devices.

The SDN device determines whether the port flow information is within a to-be-adjusted bandwidth range, and if yes, the SDN device determines that the bandwidth adjustment is needed; otherwise, the SDN device determines that the bandwidth adjustment is not needed.

After receiving the port flow information from the first SPN devices, the SDN device calculates a channel flow utilization rate, and determines whether the bandwidth adjustment is to be performed in accordance with predetermined channel utilization rate thresholds. If the port flow information is greater than a maximum channel utilization rate threshold, the bandwidth needs to be increased; if the port flow information is smaller than a minimum channel utilization rate threshold, the bandwidth needs to be decreased. If the port flow information is between the maximum channel utilization rate threshold and the minimum channel utilization rate threshold, no bandwidth adjustment is needed. The bandwidth adjustment herein may be performed using a bandwidth on demand (BOD) operation, i.e., using the scheme in the embodiments of the present disclosure.

For example, the bandwidth of the channel is 100G; the maximum channel utilization rate threshold is 90%; and the minimum channel utilization rate threshold is 10%. When the port flow information is greater than 90G, the BOD operation is performed to increase the bandwidth. When the port flow information is smaller than 10G, the BOD operation is performed to decrease the bandwidth. When the port flow information is not smaller than the minimum channel utilization rate threshold and not greater than the maximum channel utilization rate threshold, the bandwidth is not adjusted.

Assuming that the SPN device fails to meet the requirement on the bandwidth adjustment, e.g., when there are not enough free slots to allocate, manual intervention is required.

After determining that the bandwidth adjustment is needed, the SDN device determines a size of the bandwidth adjustment in accordance with a size relationship between the port flow information and the thresholds in the to-be-adjusted bandwidth range.

For example, when the bandwidth of the channel is 100G and a bandwidth threshold range is 10% to 90%, the bandwidths within the threshold range are 10G to 90G. If the port flow information is 95G, it is necessary to allocate at least a bandwidth of 5G for the channel.

Optionally, the SDN device selects slots to be adjusted in accordance with the determined size of the bandwidth adjustment as well as slot information for determining current working slots and free slots of each first SPN device in the SPN group information, and generates the bandwidth adjustment information in accordance with the selected slots.

The slot information for determining the current working slots and free slots of each first SPN device is any information that can be used for determining the slots to be adjusted. The adjustment herein includes the addition of a certain slot or slots or the reduction of a certain slot or slots.

If the SDN device needs to add slots, the SDN device may select a part of or all of the slots from the free slots available for all the SPN devices in the same path.

If the SDN device needs to reduce slots, the SDN device may select a part of or all of the slots from the working slots available for all the SPN devices in the path.

During the implementation, after determining that the bandwidth adjustment is needed, the SDN device transmits the bandwidth adjustment information to the SPN devices in the same SPN channel.

Correspondingly, after receiving the bandwidth adjustment information from the SDN device, the first SPN device adjusts the bandwidth of link between the first SPN device and the SPN device connected to the first SPN device in the SPN channel in accordance with the bandwidth adjustment information.

In the embodiment of the present disclosure, after receiving the bandwidth adjustment information from the SDN device, the first SPN device may perform bandwidth adjustment negotiation with SPN devices connected to the first SPN device at both sides (if there is merely one side having a device connected to the first SPN device, the first SPN device performs the bandwidth adjustment negotiation with the device at the one side), and adjust the bandwidth of link after performing the bandwidth adjustment negotiation successfully.

Optionally, the first SPN device determines the slots to be adjusted in accordance with the bandwidth adjustment information, and performs the bandwidth adjustment negotiation with the SPN device connected to the first SPN device in the SPN channel.

To be specific, the first SPN device determines the adjusted working slots and free slots in accordance with the bandwidth adjustment information, and transmits the slot information for determining the working slots and the free slots to a first SPN device connected thereto in the SPN channel.

And the first SPN device receives slot information for determining working slots and free slots from the SPN device connected to the first SPN device in the SPN channel.

Correspondingly, the first SPN device adjusts a bandwidth of link for transmission between the first SPN devices in the SPN channel in accordance with the bandwidth adjustment information, and adjusts the bandwidth of link for reception between the first SPN devices in accordance with the slot information received during the bandwidth adjustment negotiation for determining the working slots and the free slots.

For example, as shown in Fig. 2, the device SPN1 and the device SPN2 may adjust the bandwidth of link for transmission between the SPN devices in the SPN channel in accordance with the bandwidth adjustment information issued by the SDN device. The bandwidth adjusted by the device SPN1 is working slots 1 and free slots 1, and the bandwidth adjusted by the device SPN2 is working slots 2 and free slots 2.

The device SPN1 transmits the adjusted working slots 1 and free slots 1 to the SPN device SPN2. After the negotiation of the device SPN1 with the device SPN2, the bandwidth of link for a reception channel of the device SPN2 is updated as the working slots 1 and the free slots 1.

The device SPN2 transmits the adjusted working slots 2 and free slots 2 to the device SPN1. After the negotiation of the device SPN2 with the device SPN1, the bandwidth of link for a reception channel of the device SPN1 is updated as the working slots 2 and the free slots 2.

The device SPN1 transmits the adjusted slots to the device SPN2. After receiving of the slot information, the device SPN2 compares it with existing slots, and if the device SPN2discovers a new working slot needs to be added but device SPN2 has no free slot, then the bandwidth adjustment negotiation of the device SPN1 with the device SPN2 fails. After receiving the slot information, the device SPN2 compares it with the existing slots, and if the device SPN2 discovers a working slot needs to be deleted but the device SPN2 does not have the to-be-deleted working slot, then the bandwidth adjustment negotiation of the device SPN1 with the device SPN2 fails.

After the bandwidth adjustment negotiation fails, the SPN device may notify the SDN device, and the SDN device notifies, in a predetermined notification manner, so that the device parameters are adjusted through manual intervention.

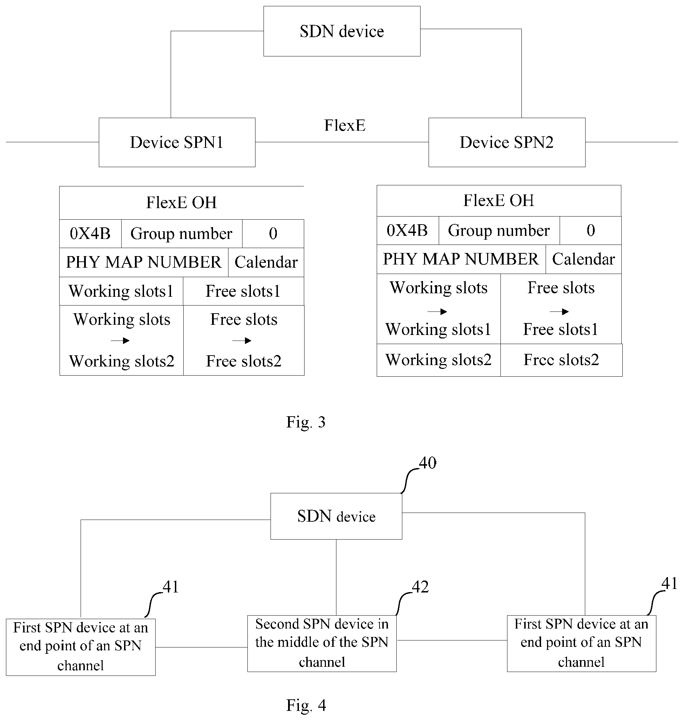

The bandwidth adjustment negotiation of the SPN devices will be described herein in conjunction with Fig. 3.

As shown in Fig. 3, after receiving of the bandwidth adjustment information issued by the SDN device, an SPN device 1 determines the adjusted working slots and free slots, i.e., the working slots 1 and the free slots 1, and adds the same into the FlexE OH.

The SPN device 1 transmits the FlexE OH to an SPN device 2 connected to the SPN device 1 in the SPN channel.

After receiving the FlexE OH from the SPN device 1, the SPN device 2 compares the working slots 1 and the free slots 1 carried in the FlexE OH with working slots and free slots in a reception link of the SPN device 2, and discovers the slots need to be updated, then the SPN device 2 updates the working slots and the free slots in bandwidth of the reception link with the working slots 1 and free slots 1, add the updated working slots 1 and free slots 1 into the FlexE OH for transmission, and notify the SPN device 1 that the bandwidth of the reception link has been adjusted.

After determining that the bandwidth of the reception link for the SPN device 2 has been adjusted, the SPN device 1 adjusts a bandwidth of a transmission link for the SPN device 1 in accordance with the bandwidth adjustment information issued by the SDN device.

Similar to the above steps, after receiving the bandwidth adjustment information issued by the SDN device, the SPN device 2 determines the adjusted working slots and free slots, i.e., the working slots 2 and the free slots 2, and add the same into the FlexE OH.

The SPN device 2 transmits the FlexE OH to the SPN device 1 connected to the SPN device 2 in the SPN channel.

After receiving the FlexE OH from the SPN device 2, the SPN device 1 compares the working slots 2 and the free slots 2 carried in the FlexE OH with working slots and free slots in a reception link of the SPN device 1, and discovers the slots need to be updated, then the SPN device 1 updates the working slots and the free slots in the bandwidth of the reception link with the working slots 2 and free slots 2, adds the updated working slots 2 and free slots 2 into the FlexE OH for transmission, and notifies the SPN device 2 that the bandwidth of the reception link has been adjusted.

After determining that the bandwidth of the reception link for the SPN device 1 has been adjusted, the SPN device 2 adjusts a bandwidth of a transmission link for the SPN device 2 in accordance with the bandwidth adjustment information issued by the SDN device.

Second scenario: the SPN devices are located at the both ends of, and in the middle of, the same SPN channel, i.e., there are at least three SPN devices in the SPN channel.

As shown in Fig. 4, when the SPN devices are located at the end points of, and in the middle of, the same SPN channel, the system for performing a bandwidth adjustment for the SPN devices includes an SDN device 40, first SPN devices 41 at the end points of the SPN channel, and a second SPN device 42 in the middle of the SPN channel.

The SDN device 40 is configured to determine whether the SPN devices in the same SPN channel need a bandwidth adjustment in accordance with SPN group information and port flow information reported by the SPN devices, and when it is determined that the bandwidth adjustment is needed, transmit bandwidth adjustment information to the SPN devices in the same SPN channel.

Each of the first SPN devices 41 at the end points of the SPN channel is configured to report the SPN group information and the port flow information for determining whether the bandwidth adjustment is to be performed, and after receiving the bandwidth adjustment information from the SDN device, adjust the bandwidths of link between the SPN devices connected to each other in the SPN channel in accordance with the bandwidth adjustment information.

The second SPN device 42 in the middle of the SPN channel is configured to report the SPN group information and the port flow information for determining whether the bandwidth adjustment is to be performed to the SDN device, and after receiving the bandwidth adjustment information from the SDN device, adjust the bandwidths of link between the second SPN device and SPN devices connected to the second SPN device at both sides in the SPN channel in accordance with the bandwidth adjustment information.

According to the embodiments of the present disclosure, SPN devices report the SPN group information and the port flow information for determining whether the bandwidth adjustment is to be performed. The SDN device may determine whether the SPN devices in the same SPN channel need the bandwidth adjustment in accordance with the SPN group information and the port flow information reported by the SPN devices, and transmit the bandwidth adjustment information to the SPN devices in the same SPN channel after determining that the bandwidth adjustment is needed. After receiving the bandwidth adjustment information from the SDN device, the first SPN devices adjust the bandwidth of link between the SPN devices connected to each other in the SPN channel in accordance with the bandwidth adjustment information. After receiving the bandwidth adjustment information, the second SPN device adjusts respectively the bandwidths of link between the second SPN device and the SPN device connected to the second SPN device at both sides in the SPN channel in accordance with the bandwidth adjustment information. Owing to the dynamic adjustment of transmission slots and thus the needlessness of manual and static configuration of the transmission slots for two ends of the link via an EMS in the case where the bandwidth of link changes, it is unnecessary to interrupt an existing link, thereby enabling prevention of the interruption and loss of data flow for customers, and further improving the transmission efficiency.

In the embodiments of the present disclosure, existing SPN group information is exchanged between the SPN devices through an FlexE OH. The SPN group information may include, but not limited to, some or all of a group number, a configured physical map number (PHY MAP NUMBER), a calendar, working slots and free slots

The FlexE herein is an interfacing technology for service isolation bearing and network slicing via a bearer network, while OH is the overhead and a forefront portion of a data packet.

A purpose of exchanging the existing SPN group information between the SPN devices through the FlexE OH is to verify whether the SPN devices in the link belong to the same SPN channel. When the SPN group information of the SPN devices is the same, the SPN devices in the link belong to the same SPN channel..

The addition of working slots and free slots in the SPN group information is for the purpose of the subsequent determination on whether to add or delete slots, i.e., adjust the bandwidth by the SDN device.

Optionally, each of the first SPN devices at the end points of the SPN channel may report the SPN group information and the port flow information for determining whether the bandwidth adjustment is to be performed to the SDN device.

The SPN group information herein includes, but is not limited to, some or all of the group number, PHY MAP NUMBER, calendar, and working slots and free slots of the SPN.

The SDN device determines the SPN devices in the same SPN channel in accordance with the SPN group information reported by the first SPN devices. For example, when the SPN group information includes the same group number, same configured PHY MAP NUMBER and same calendar, the SDN device determines that the SPN devices are in the same SPN channel.

The port flow information herein may refer to a size of a flow to pass through the SPN channel.

Optionally, a second SDN device in the middle of the SPN channel may report SPN group information and port flow information for determining whether the bandwidth adjustment is to be performed to the SDN device.

The SPN group information herein includes, but is not limited to, some or all of a group number, a configured PHY MAP NUMBER, a calendar, and working slots and free slots of the SPN device.

The SDN device determines the SPN devices in the same SPN channel in accordance with the SPN group information reported by the second SPN device. For example, when the SPN group information includes the same group number, same configured PHY MAP NUMBER and same calendar, the SDN device determines that the SPN devices are in the same SPN channel.

Optionally, the SDN device may determine whether the SPN devices in the same SPN channel needs the bandwidth adjustment in accordance with the SPN group information and the port flow information reported by the SPN devices.

The SDN device determines whether the port flow information is within a to-be-adjusted bandwidth range, and if yes, the SDN device determines that the bandwidth adjustment is needed; otherwise, the SDN device determines that the bandwidth adjustment is not needed.

After receiving the port flow information from the SPN devices, the SDN device calculates a channel flow utilization rate, and determines whether the bandwidth adjustment is to be performed in accordance with predetermined channel utilization rate thresholds. If the port flow information is greater than a maximum channel utilization rate threshold, the bandwidth needs to be increased; if the port flow information is smaller than a minimum channel utilization rate threshold, the bandwidth needs to be decreased. if the port flow information is between the maximum channel utilization rate threshold and the minimum channel utilization rate threshold, no bandwidth adjustment is needed. Here, the bandwidth adjustment herein may be performed using a BOD operation, i.e., using the scheme in the embodiments of the present disclosure.

For example, the bandwidth of the channel is 100G; the maximum channel utilization rate threshold is 90%; and the minimum channel utilization rate threshold is 10%. When the port flow information is greater than 90G, the BOD operation is performed to increase the bandwidth. When the port flow information is smaller than 10G, the BOD operation is performed to decrease the bandwidth. When the port flow information is not smaller than the minimum channel utilization rate threshold and not greater than the maximum channel utilization rate threshold, the bandwidth is not adjusted.

Assuming that the SPN device fails to meet the requirement on the bandwidth adjustment, e.g., when there are not enough free slots to allocate, manual intervention is required.

After determining that the bandwidth adjustment is needed, the SDN device determines a size of the bandwidth adjustment in accordance with a size relationship between the port flow information and the thresholds in the to-be-adjusted bandwidth range.

For example, when the bandwidth of the channel is 100G and a bandwidth threshold range is 10% to 90%, the bandwidths within the threshold range are 10G to 90G. If the port flow information is 95G, it is necessary to allocate at least a bandwidth of 5G for the channel.

Optionally, the SDN device selects slots to be adjusted in accordance with the determined size of the bandwidth adjustment as well as slot information for determining current working slots and free slots of the SPN devices in the SPN group information, and generates the bandwidth adjustment information in accordance with the selected slots.

The slot information for determining the current working slots and free slots of SPN devices is any information that can be used for determining the slots to be adjusted. The adjustment herein includes the addition of a certain slot or slots or the reduction of a certain slot or slots.

If the SDN device needs to add slots, the SDN device may select a part of or all of the slots from the free slots available for all the SPN devices in the same path.

If the SDN device needs to reduce slots, the SDN device may select a part of or all of the slots from the working slots available for all the SPN devices in the same path.

During the implementation, after determining that the bandwidth adjustment is needed, the SDN device transmits the bandwidth adjustment information to the SPN devices in the same SPN channel.

Correspondingly, after receiving the bandwidth adjustment information from the SDN device, the first SPN device adjusts the bandwidth of link between the first SPN device and the SPN device connected to the first SPN device in the SPN channel in accordance with the bandwidth adjustment information.

In the embodiment of the present disclosure, after receiving the bandwidth adjustment information from the SDN device, the first SPN device may perform bandwidth adjustment negotiation with SPN devices connected to the first SPN device at both sides (if there is merely one side having a device connected to the first SPN device, the first SPN device performs the bandwidth adjustment negotiation with the device at the one side), and adjust the bandwidth of link after performing the bandwidth adjustment negotiation successfully.

Optionally, the first SPN device determines the slots to be adjusted in accordance with the bandwidth adjustment information, and performs the bandwidth adjustment negotiation with the SPN device connected to the first SPN device in the SPN channel.

To be specific, the first SPN device determines the adjusted working slots and free slots in accordance with the bandwidth adjustment information, and transmits the slot information for determining the working slots and the free slots to a SPN device connected thereto in the SPN channel.

And the first SPN device receives slot information for determining working slots and free slots from the SPN device connected to the first SPN device in the SPN channel.

Correspondingly, the first SPN device adjusts the bandwidth of the link for transmission between the SPN devices in the SPN channel in accordance with the bandwidth adjustment information, and adjusts the bandwidth of link for reception between the SPN devices in accordance with the slot information received during the bandwidth adjustment negotiation for determining the working slots and the free slots.

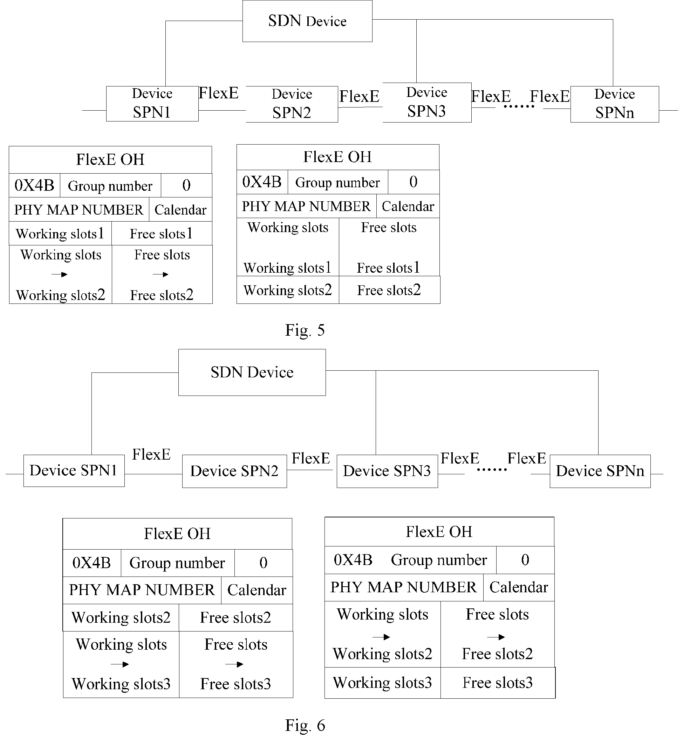

For example, as shown in Fig. 5, the device SPN1 and the device SPN2 may adjust the bandwidth of link for transmission between the SPN devices in the SPN channel in accordance with the bandwidth adjustment information issued by the SDN device. The bandwidth adjusted by the device SPN1 is working slots 1 and free slots 1, and the bandwidth adjusted by the device SPN2 is working slots 2 and free slots 2..

The device SPN1 transmits the adjusted working slots 1 and free slots 1 to the SPN device SPN2. After the negotiation of the device SPN1 with the device SPN2, the bandwidth of link for a reception channel of the device SPN2 is updated as the working slots 1 and the free slots 1.

The device SPN2 transmits the adjusted working slots 2 and free slots 2 to the SPN device SPN1. After the negotiation of the device SPN2 with the device SPN1, the bandwidth of link for a reception channel of the device SPN1 is updated as the working slots 2 and the free slots 2.

The device SPN1 transmits the adjusted slots to the device SPN2. After receiving of the slot information, the device SPN2 compares it with existing slots, and if the device SPN2 discovers a new working slot needs to be added but device SPN2 has no free slot, then the bandwidth adjustment negotiation of the device SPN1 with the device SPN2 fails. After receiving the slot information, the device SPN2 compares it with the existing slots, and if the device SPN2 discovers a working slot needs to be deleted but the device SPN2 does not have the to-be-deleted working slot, then the bandwidth adjustment negotiation of the device SPN1 with the device SPN2 fails.

After the bandwidth adjustment negotiation fails, the SPN device may notify the SDN device, and the SDN device notifies, in a predetermined notification manner, so that the device parameters are adjusted through manual intervention.

Correspondingly, after receiving the bandwidth adjustment information from the SDN device, the second SPN device adjusts respectively the bandwidths of link between the second SPN device and the SPN devices connected to the second SPN device at both sides in the SPN channel in accordance with the bandwidth adjustment information.

In the embodiment of the present embodiment, after receiving the bandwidth adjustment information from the SDN device, the second SPN device may perform bandwidth adjustment negotiation with the SPN device connected to the second SPN device at both sides (if there is merely one side having a device connected to the first SPN device, the second SPN device performs the bandwidth adjustment negotiation with the device at the one side), and adjust the bandwidth of link after performing the bandwidth adjustment negotiation successfully.

Optionally, the second SPN device determines the slots to be adjusted in accordance with the bandwidth adjustment information, and performs the bandwidth adjustment negotiation with the SPN devices connected to the second SPN device at both sides in the SPN channel.

To be specific, the second SPN device determines the adjusted working slots and free slots in accordance with the bandwidth adjustment information, and transmits the slot information for determining the working slots and the free slots to the SPN device connected to the second SPN device at one side in the SPN channel.

And the second SPN device may receive the slot information for determining working slots and free slots from the SPN device connected to the second SPN device at the one side in the SPN channel.

Correspondingly, the second SPN device adjusts the bandwidth of link for transmission between the second SPN device and the SPN device connected to the second SPN device at one side in the SPN channel in accordance with the bandwidth adjustment information, and adjusts the bandwidth of link for reception between the second SPN device and the SPN device connected to the second SPN device at one side in the SPN channel in accordance with the slot information received during the bandwidth adjustment negotiation for determining the working slots and the free slots from the SPN device connected to the second SPN device at the one side .

For example, as shown in Fig. 6, the device SPN1 is an SPN device at one end point of the SPN channel, while the device SPN2 is an SPN device in the middle of the SPN channel, and the device SPN3 may be an SPN device in the middle of, or at one end point of, the SPN channel.

The device SPN2 and the device SPN3 adjust the bandwidth of link for transmission between the SPN devices in the SPN channel in accordance with the bandwidth adjustment information issued by the SDN device. The bandwidth adjusted by the device SPN2 is working slots 2 and free slots 2, and the bandwidth adjusted by the device SPN3 is working slots 3 and free slots 3.

The SPN device SPN2 may transmit the adjusted working slots 2 and free slots 2 to the SPN device SPN3. After the negotiation of the device SPN2 with the device SPN3, the bandwidth of link for a reception channel of the device SPN3 may be updated with the working slots 2 and the free slots 2.

The device SPN3 transmits the adjusted working slots 3 and free slots 3 to the device SPN2. After the negotiation of the device SPN3 with the device SPN2, the bandwidth of link for a reception channel of the device SPN2 may be updated with the working slots 3 and the free slots 3.

A negotiation process of the two devices in Fig. 6 may be similar to that in Fig. 3, with an only difference that the SPN device in the middle of the SPN channel needs to negotiate with the two devices at both sides respectively, which will not be particularly defined herein.

The device SPN1 transmits the adjusted slots to the SPN device SPN2. After receiving the slot information, the device SPN2 compares it with existing slots, and if the device SPN2discovers that a new working slot needs to be added but device SPN2 has no free slot, then the bandwidth adjustment negotiation of the device SPN1 with the SPN device SPN2 fails. After receiving the slot information, the device SPN2 compares the it with the existing slots, and if the SPN2 discovers that a working slot needs to be deleted but the device SPN2 does not include the to-be-deleted working slot, then the bandwidth adjustment negotiation between the device SPN1 with the device SPN2 fails.

After the bandwidth adjustment negotiation fails, the SPN device may notify the SDN device, and the SDN device notifies, in a predetermined notification manner, so that the device parameters are adjusted through manual intervention..

Optionally, after determining that the bandwidth adjustment negotiation with the SPN devices at both sides of the second SPN device is successfully performed, the second SPN device adjusts respectively the bandwidths of the reception links of the SPN devices connected to the second SPN device at both sides in the SPN channel.

The second SPN device establishes a slot exchanging relationship in accordance with the adjusted bandwidths of link, where the slot exchanging relationship is a mapping exchanging relationship of the FlexE channel slots onto the SPN devices.

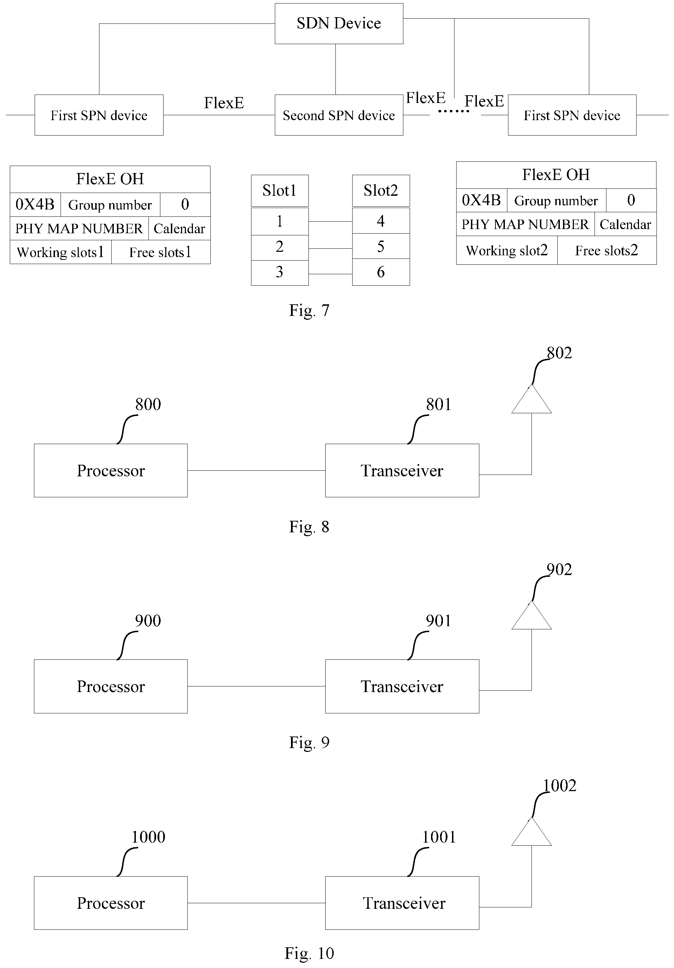

As shown in Fig. 7, the second SPN device and the first SPN device at one side determine the slots at the one side of the second SPN device, e.g., slot 1, slot 2 and slot 3 in accordance with the updated working slots and free slots; the second SPN device and the first SPN device at the other side determines the slots at the other side of the second SPN device, e.g., slot 4, slot 5 and slot 6 in accordance with the updated working slots and free slots,. A slot exchanging relationship is established between the slot 1 and the slot 4; a slot exchanging relationship is established between the slot 2 and the slot 5; and a slot exchanging relationship is established between the slot 3 and the slot 6, so as to finally form an end-to-end SPN channel.

As shown in Fig. 8, the present disclosure further provides in some embodiments a bandwidth adjustment device which includes a processor 800 and a transceiver 801.

The processor 800 is configured to: determine whether SPN devices in a same SPN channel need a bandwidth adjustment in accordance with SPN group information and port flow information reported by the SPN devices; and after determining that the bandwidth adjustment is needed, transmit bandwidth adjustment information to the SPN devices in the same SPN channel.

Optionally, the processor 800 is further configured to: determine the SPN devices in the same SPN channel in accordance with the SPN group information reported by the SPN devices; and determine whether the port flow information is within a to-be-adjusted bandwidth range, and if yes, determine that the bandwidth adjustment is needed; otherwise, determine that the bandwidth adjustment is not needed.

Optionally, the processor 800 is further configured to: after determining that the bandwidth adjustment is needed, determine a size of the bandwidth adjustment in accordance with a size relationship between the port flow information and thresholds in the to-be-adjusted bandwidth range; and select slots to be adjusted in accordance with the determined size of the bandwidth adjustment as well as slot information for determining current working slots and free slots of the SPN devices in the SPN group information, and generate the bandwidth adjustment information in accordance with the selected slots.

As shown in Fig. 9, the present disclosure further provides in some embodiments a bandwidth adjustment device, which includes a processor 900 and a transceiver 901.

The processor 900 is configured to: report SPN group information and port flow information for determining whether a bandwidth adjustment is to be performed to an SDN device; and after receiving bandwidth adjustment information from the SDN device, adjust a bandwidth of link between the bandwidth adjustment device and an SPN device connected to the bandwidth adjustment device in an SPN channel in accordance with the bandwidth adjustment information.

Optionally, the processor 900 is specifically configured to: determine slots to be adjusted in accordance with the bandwidth adjustment information and perform bandwidth adjustment negotiation with the SPN device connected to the bandwidth adjustment device in the SPN channel; and after determining that the bandwidth adjustment negotiation is successfully performed, adjust the bandwidth of link between the bandwidth adjustment device and the SPN device connected to the bandwidth adjustment device in the SPN channel.

Optionally, the processor 900 is specifically configured to: determine adjusted working slots and free slots in accordance with the bandwidth adjustment information, and transmit slot information for determining the working slots and the free slots to the SPN device connected to the bandwidth adjustment device in the SPN channel; and receive slot information for determining working slots and free slots from the SPN device connected to the bandwidth adjustment device in the SPN channel.

Optionally, the processor 900 is specifically configured to adjust a bandwidth of link for transmission between the bandwidth adjustment device and the SPN device connected to the bandwidth adjustment device in the SPN channel in accordance with the bandwidth adjustment information, and adjust a bandwidth of link for reception between the bandwidth adjustment device and the SPN device connected to the bandwidth adjustment device in accordance with the slot information received during the bandwidth adjustment negotiation for determining the working slots and the free slots.

Optionally, the SPN group information reported by the processor 900 includes slot information for determining the working slots and the free slots.

As shown in Fig. 10, the present disclosure further provides in some embodiments a bandwidth adjustment device, which includes a processor 1000 and a transceiver 1001.

The processor 1000 is configured to: report SPN group information and port flow information for determining whether a bandwidth adjustment is to be performed to an SDN device; and after receiving bandwidth adjustment information from the SDN device, adjust respectively the bandwidths of link between the bandwidth adjustment device and SPN devices connected to the bandwidth adjustment device at both sides in an SPN channel in accordance with the bandwidth adjustment information.

Optionally, the processor 1000 is specifically configured to: determine slots to be adjusted in accordance with the bandwidth adjustment information and perform bandwidth adjustment negotiation with the SPN devices connected to the bandwidth adjustment device at both sides in the SPN channel; and after determining that the bandwidth adjustment negotiation is successfully performed, adjust respectively the bandwidths of link between the bandwidth adjustment device and the SPN devices connected to the bandwidth adjustment device at both sides in the SPN channel.

Optionally, the processor 1000 is specifically configured to: determine adjusted working slots and free slots in accordance with the bandwidth adjustment information and transmit slot information for determining the working slots and the free slots to the SPN device connected to the bandwidth adjustment device at one side in the SPN channel; and receive slot information for determining working slots and free slots from the SPN device connected to the bandwidth adjustment device at the one side in the SPN channel.

Optionally, the processor 1000 is further configured to adjust the bandwidth of the link for transmission between the bandwidth adjustment device and the SPN device connected to the bandwidth adjustment device at one side in the SPN channel in accordance with the bandwidth adjustment information, and adjust the bandwidth of link for reception between the bandwidth adjustment device and the SPN device connected to the bandwidth adjustment device at the one side in the SPN channel in accordance with the slot information for determining the working slots and the free slots received during the bandwidth adjustment negotiation from the SPN device connected to the bandwidth adjustment device at the one side.

Optionally, the processor 1000 is further configured to establish a slot exchanging relationship in accordance with the adjusted bandwidths of link.

Optionally, the SPN group information reported by the processor 1000 includes slot information for determining the working slots and the free slots.

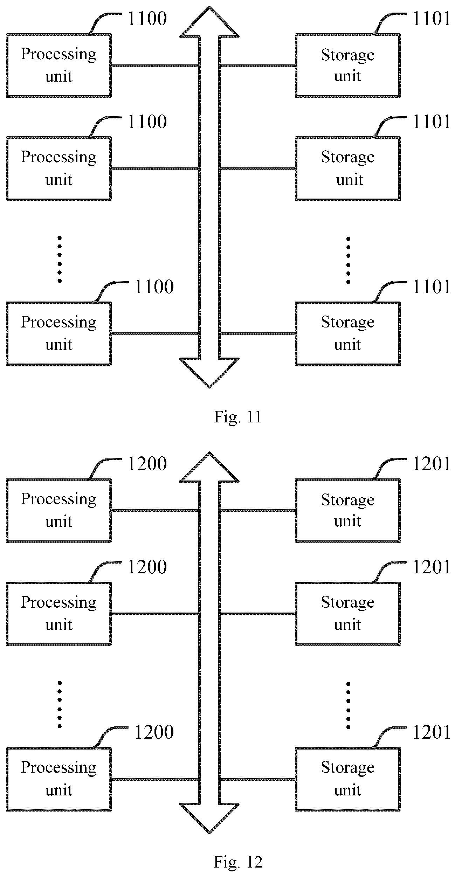

Fig. 11 is an embodiment not covered by the claims. As shown in Fig. 11, the present disclosure further provides in some embodiments a bandwidth adjustment device, which includes at least one processing unit 1100 and at least one storage unit 1101 storing therein a program code. The program code, when executed by the processing unit 1100, causes the processing unit 1100 to: determine whether SPN devices in a same SPN channel need a bandwidth adjustment in accordance with SPN group information and port flow information reported by the SPN devices; and determining that the bandwidth adjustment is needed, transmit bandwidth adjustment information to the SPN devices in the same SPN channel.

Optionally, the processing unit 1100 is specifically configured to: determine the SPN devices in the same SPN channel in accordance with the SPN group information reported by the SPN devices; and determine whether the port flow information is within a to-be-adjusted bandwidth range, and if yes, determine that the bandwidth adjustment is needed; otherwise, determine that the bandwidth adjustment is not needed.

Optionally, the processing unit 1100 is specifically configured to: after determining that the bandwidth adjustment is needed, determine a size of the bandwidth adjustment in accordance with a relationship between the port flow information and thresholds in the to-be-adjusted bandwidth range; and select slots to be adjusted in accordance with the determined size of the bandwidth adjustment as well as slot information for determining current working slots and free slots of the SPN devices in the SPN group information, and generate the bandwidth adjustment information in accordance with the selected slots.

Fig. 12 is an embodiment not covered by the claims. As shown in Fig. 12, the present disclosure further provides in some embodiments a bandwidth adjustment device, which includes at least one processing unit 1200 and at least one storage unit 1201 storing therein a program code. The program code, when executed by the processing unit 1200, causes the processing unit 1200 to: report SPN group information and port flow information for determining whether a bandwidth adjustment is to be performed to an SDN device; and after receiving bandwidth adjustment information from the SDN device, adjust the bandwidth of link between the bandwidth adjustment device and an SPN device connected to the bandwidth adjustment device in an SPN channel in accordance with the bandwidth adjustment information.

Optionally, the processing unit 1200 is specifically configured to: determine slots to be adjusted in accordance with the bandwidth adjustment information and perform bandwidth adjustment negotiation with the SPN device connected to the bandwidth adjustment device in the SPN channel; and after determining that the bandwidth adjustment negotiation is successfully performed, adjust the bandwidth of link between the bandwidth adjustment device and the SPN device connected to the bandwidth adjustment device in the SPN channel.

Optionally, the processing unit 1200 is specifically configured to: determine adjusted working slots and free slots in accordance with the bandwidth adjustment information, and transmit slot information for determining the working slots and the free slots to the SPN device connected to the bandwidth adjustment device in the SPN channel; and receive slot information for determining working slots and free slots from the SPN device connected to the bandwidth adjustment device in the SPN channel.

Optionally, the processing unit 1200 is specifically configured to adjust a bandwidth of link for transmission between the bandwidth adjustment device and the SPN device connected to the bandwidth adjustment device in the SPN channel in accordance with the bandwidth adjustment information, and adjust a bandwidth of link for reception between the bandwidth adjustment device and the SPN device connected to the bandwidth adjustment device in the SPN channel in accordance with the slot information received during the bandwidth adjustment negotiation for determining the working slots and the free slots.

Optionally, the SPN group information reported by the processing unit 1200 includes slot information for determining the working slots and the free slots..

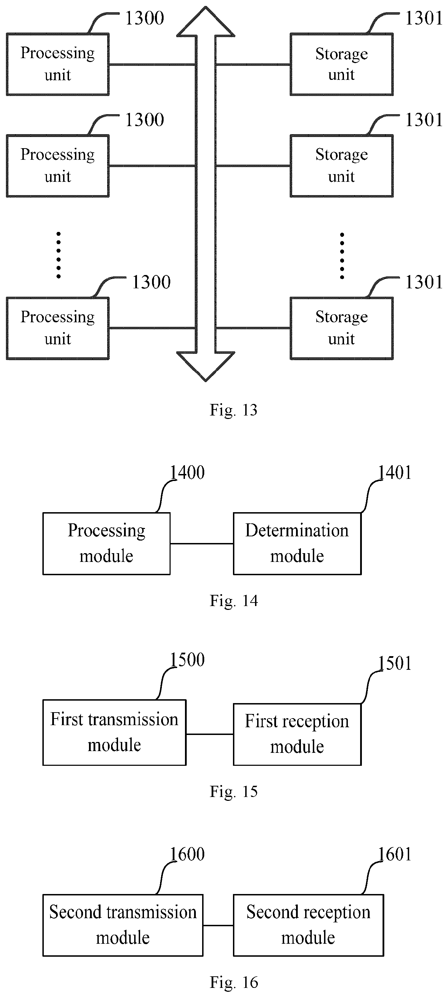

Fig. 13 is an embodiment not covered by the claims. As shown in Fig. 13, the present disclosure further provides in some embodiments a bandwidth adjustment device, which includes at least one processing unit 1300 and at least one storage unit 1301 storing therein a program code. The program code, when executed by the processing unit 1300, causes the processing unit 1300 to: report SPN group information and port flow information for determining whether a bandwidth adjustment is to be performed to an SDN device; After receiving bandwidth adjustment information from the SDN device, adjust the bandwidths of link between the bandwidth adjustment device and SPN devices connected to the bandwidth adjustment device at both sides in an SPN channel in accordance with the bandwidth adjustment information.

Optionally, the processing unit 1300 is specifically configured to: determine slots to be adjusted in accordance with the bandwidth adjustment information and perform bandwidth adjustment negotiation with the SPN devices connected to the bandwidth adjustment device at both sides in the SPN channel; and after determining that the bandwidth adjustment negotiation is successfully performed, adjust the bandwidths of link between the bandwidth adjustment device and the SPN devices connected to the bandwidth adjustment device at both sides in the SPN channel.

Optionally, the processing unit 1300 is specifically configured to: determine adjusted working slots and free slots in accordance with the bandwidth adjustment information and transmit slot information for determining the working slots and the free slots to the SPN device connected to the bandwidth adjustment device at one side in the SPN channel; and receive slot information for determining working slots and free slots from the SPN device connected to the bandwidth adjustment device at the one side in the SPN channel.

Optionally, the processing unit 1300 is specifically configured to adjust a bandwidth of link for transmission between the bandwidth adjustment device and the SPN device connected to the bandwidth adjustment device at one side in the SPN channel in accordance with the bandwidth adjustment information, and adjust a bandwidth of link for reception between the bandwidth adjustment device and the SPN device connected to the bandwidth adjustment device at one side in the SPN channel in accordance with the slot information for determining the working slots and the free slots received during the bandwidth adjustment negotiation from the SPN device connected to the bandwidth adjustment device at the one side in the SPN channel.

Optionally, the processing unit 1300 is further specifically configured to establish a slot exchanging relationship in accordance with the adjusted bandwidths of link.

Optionally, the SPN group information reported by the processing unit 1300 includes slot information for determining the working slots and the free slots.

FIG. 14 is an embodiment not covered by the claims. As shown in Fig. 14, the present disclosure further provides in some embodiments a bandwidth adjustment device, which includes a processing module 1400 and a determination module 1401. The processing module 1400 is configured to determine whether SPN devices in a same SPN channel need a bandwidth adjustment in accordance with SPN group information and port flow information reported by the SPN devices. The determination module 1401 is configured to, when the bandwidth adjustment is needed, transmit bandwidth adjustment information to the SPN devices in the same SPN channel.

Optionally, the processing module 1400 is specifically configured to: determine the SPN devices in the same SPN channel in accordance with the SPN group information reported by the SPN devices; and determine whether the port flow information is within a to-be-adjusted bandwidth range, and if yes, determine that the bandwidth adjustment is needed; otherwise, determine that the bandwidth adjustment is not needed.

Optionally, the processing module 1400 is specifically configured to: after determining that the bandwidth needs to be adjusted, determine a size of the bandwidth adjustment in accordance with a size relationship between the port flow information and thresholds in the to-be-adjusted bandwidth range; and select slots to be adjusted in accordance with the determined size of the bandwidth adjustment as well as slot information for determining current working slots and free slots of the SPN devices in the SPN group information, and generate the bandwidth adjustment information in accordance with the selected slots.

Fig. 15 is an embodiment not covered by the claims. As shown in Fig. 15, the present disclosure further provides in some embodiments a bandwidth adjustment device, which includes a first transmission module 1500 and a first reception module 1501.

The first transmission module 1500 is configured to report SPN group information and port flow information for determining whether a bandwidth adjustment is to be performed to an SDN device. The first reception module 1501 is configured to, after receiving bandwidth adjustment information from the SDN device, adjust the bandwidth of link between the bandwidth adjustment device and an SPN device connected to the bandwidth adjustment device in an SPN channel in accordance with the bandwidth adjustment information.

Optionally, the first reception module 1501 is specifically configured to: determine slots to be adjusted in accordance with the bandwidth adjustment information and perform bandwidth adjustment negotiation with the SPN device connected to the bandwidth adjustment device in the SPN channel; and after determining that the bandwidth adjustment negotiation is successfully performed, adjust the bandwidth of the link between the bandwidth adjustment device and the SPN device connected to the bandwidth adjustment device in the SPN channel.

In a possible embodiment of the present disclosure, the first reception module 1501 is specifically configured to: determine adjusted working slots and free slots in accordance with the bandwidth adjustment information, and transmit slot information for determining the working slots and the free slots to the SPN device connected to the bandwidth adjustment device in the SPN channel; and receive slot information for determining working slots and free slots from the SPN device connected to the bandwidth adjustment device in the SPN channel.

Optionally, the first reception module 1501 is specifically configured to adjust a bandwidth of link for transmission between the bandwidth adjustment device and the SPN device connected to the bandwidth adjustment device in the SPN channel in accordance with the bandwidth adjustment information, and adjust a bandwidth of link for reception between the bandwidth adjustment device and the SPN device connected to the bandwidth adjustment device in the SPN channel in accordance with the slot information received during the bandwidth adjustment negotiation for determining the working slot and the free slot.

Optionally, the SPN group information reported by the first reception module 1501 includes slot information for determining the working slots and the free slots..

Fig. 16 is an embodiment not covered by the claims. As shown in Fig. 16, the present disclosure further provides in some embodiments a bandwidth adjustment device, which includes a second transmission module 1600 and a second reception module 1601.

The second transmission module 1600 is configured to report SPN group information and port flow information for determining whether a bandwidth adjustment is to be performed to an SDN device. The second reception module 1601 is configured to, after receiving bandwidth adjustment information from the SDN device, adjust the bandwidths of link between the bandwidth adjustment device and SPN devices connected to the bandwidth adjustment device at both sides in an SPN channel in accordance with the bandwidth adjustment information.

Optionally, the second reception module 1601 is further specifically configured to: determine slots to be adjusted in accordance with the bandwidth adjustment information and perform bandwidth adjustment negotiation respectively with the SPN devices connected to the bandwidth adjustment device at both sides in the SPN channel; and after determining that the bandwidth adjustment negotiation at both sides is successfully performed, adjust respectively the bandwidths of link between the bandwidth adjustment device and the SPN devices connected to the bandwidth adjustment device at both sides in the SPN channel.

Optionally, the second reception module 1601 is specifically configured to: determine adjusted working slots and free slots in accordance with the bandwidth adjustment information and transmit slot information for determining the working slots and the free slots to the SPN device connected to the bandwidth adjustment device at one side in the SPN channel; and receive slot information for determining working slots and free slots from the SPN device connected to the bandwidth adjustment device at the one side in the SPN channel.

Optionally, the second reception module 1601 is specifically configured to adjust a bandwidth of link for transmission between the bandwidth adjustment device and the SPN device connected to the bandwidth adjustment device at one side in the SPN channel in accordance with the bandwidth adjustment information, and adjust a bandwidth of link for reception between the bandwidth adjustment device and the SPN device connected to the bandwidth adjustment device at one side in the SPN channel in accordance with the slot information for determining the working slots and the free slots received during the bandwidth adjustment negotiation from the SPN device connected to the bandwidth adjustment device at the one side in the SPN channel.

Optionally, the second reception module 1601 is further specifically configured to establish a slot exchanging relationship in accordance with the adjusted bandwidths of link.

Optionally, the SPN group information reported by the second reception module 1601includes slot information for determining the working slots and the free slots..

The present disclosure further provides in some embodiments a non-volatile readable storage medium including a computer code. The computer code, when executed by a computing device, causes the computer device to implement the steps of above-mentioned bandwidth adjustment method for the SDN device.

The present disclosure further provides in some embodiments a non-volatile readable storage medium including a computer code. The computer code, when executed by a computing device, causes the computer device to implement the steps of above-mentioned bandwidth adjustment method for the first SPN device.

The present disclosure further provides in some embodiments a non-volatile readable storage medium including a computer code. The computer code, when executed by a computing device, causes the computer device to implement the steps of above-mentioned bandwidth adjustment method for the second SPN device.

Based on a same inventive concept, the present disclosure further provides in some embodiments a bandwidth adjustment method. The device corresponding to the bandwidth adjustment method is the SDN device in the above-mentioned bandwidth adjustment system, and a principle for solving the problem through the bandwidth adjustment method is similar to the principle for solving the problem by the SDN device, so as for the implementation of the bandwidth adjustment method, reference can be made to the implementation of the system, which will not be particularly defined herein.

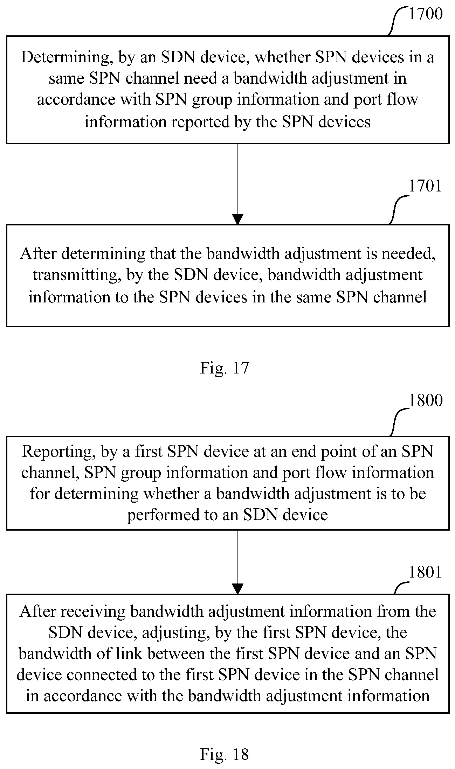

As shown in Fig. 17, the present disclosure further provides in some embodiments a bandwidth adjustment method including:
Step 1700: determining, by an SDN device, whether SPN devices in a same SPN channel need a bandwidth adjustment in accordance with SPN group information and port flow information reported by the SPN devices; and
Step 1701: after determining that the bandwidth adjustment is needed, transmitting, by the SDN device, bandwidth adjustment information to the SPN devices in the same SPN channel.

Optionally, the determining, by the SDN device, whether the SPN devices in the same SPN channel need the bandwidth adjustment in accordance with SPN group information and port flow information reported by the SPN devices includes: determining, by the SDN device, the SPN devices in the same SPN channel in accordance with the SPN group information reported by the SPN devices; and determining, by the SDN device, whether the port flow information is within a to-be-adjusted bandwidth range, and if yes, determining that the bandwidth adjustment is needed; otherwise, determining that the bandwidth adjustment is not needed.

Optionally, after the SDN device determines that the bandwidth adjustment is needed, and before transmitting the bandwidth adjustment information to the SPN devices in the same SPN channel, the bandwidth adjustment method further includes: after determining that the bandwidth adjustment is needed, determining, by the SDN device, a size of the bandwidth adjustment in accordance with a size relationship between the port flow information and thresholds in the to-be-adjusted bandwidth range; and selecting, by the SDN device, slots to be adjusted in accordance with the determined size of the bandwidth adjustment to be adjusted as well as slot information for determining current working slots and free slots of the SPN devices in the SPN group information, and generating the bandwidth adjustment information in accordance with the selected slots.

Based on a same inventive concept, the present disclosure further provides in some embodiments a bandwidth adjustment method. The device corresponding to the bandwidth adjustment method is the first SDN device at one end point of the SPN channel in the above-mentioned bandwidth adjustment system, and a principle for solving the problem by the bandwidth adjustment method is similar to the principle for solving the problem by the first SPN device, so as for the implementation of the bandwidth adjustment method, reference can be made to the implementation of the system, which will not be particularly defined herein.

As shown in Fig. 18, the present disclosure further provides in some embodiments a bandwidth adjustment method which includes:
Step 1800: reporting, by a first SPN device at an end point of an SPN channel, SPN group information and port flow information for determining whether a bandwidth adjustment is to be performed to an SDN device; and
Step 1801: after receiving bandwidth adjustment information from the SDN device, adjusting, by the first SPN device, the bandwidth of link between the first SPN device and an SPN device connected to the first SPN device in the SPN channel in accordance with the bandwidth adjustment information.

Optionally, the adjusting, by the first SPN device, the bandwidth of link between the first SPN device and the SPN device connected to the first SPN device in the SPN channel in accordance with the bandwidth adjustment information includes: determining, by the first SPN device, slots to be adjusted in accordance with the bandwidth adjustment information and performing bandwidth adjustment negotiation with the SPN device connected to the first SPN device in the SPN channel; and after the bandwidth adjustment negotiation is performed successfully, adjusting, by the first SPN device, the bandwidth of link between the first SPN and the SPN device connected to the first SPN device in the SPN channel.

Optionally, the performing, by the first SPN device, the bandwidth adjustment negotiation with the SPN device connected to the first SPN device in the SPN channel includes: determining, by the first SPN device, adjusted working slots and free slots in accordance with the bandwidth adjustment information, and transmitting slot information for determining the working slots and the free slots to the SPN device connected to the first SPN device in the SPN channel; and receiving, by the first SPN device, slot information for determining working slots and free slots from the SPN device connected to the first SPN device in the SPN channel.

Optionally, the adjusting, by the first SPN device, the bandwidth of link between the first SPN device and the SPN device connected to the first SPN device in the SPN channel in accordance with the bandwidth adjustment information includes adjusting, by the first SPN device, the bandwidth of link for transmission between the first SPN device and the SPN device connected to the first SPN device in the SPN channel in accordance with the bandwidth adjustment information, and adjusting a bandwidth of link for reception between the first SPN device and the SPN device connected to the first SPN device in accordance with the slot information received during the bandwidth adjustment negotiation for determining the working slots and the free slots.

Optionally, the SPN group information reported by the first SPN device includes the slot information for determining the working slots and the free slots.

Based on a same inventive concept, the present disclosure further provides in some embodiments a bandwidth adjustment method. The device corresponding to the bandwidth adjustment method is the second SDN device in the middle of the SPN channel in the above-mentioned bandwidth adjustment system, and a principle for solving the problem by the bandwidth adjustment method is similar to the principle for solving the problem by the second SPN device, so as for the implementation of the bandwidth adjustment method, reference can be made to the implementation of the system, which will not be particularly defined herein.

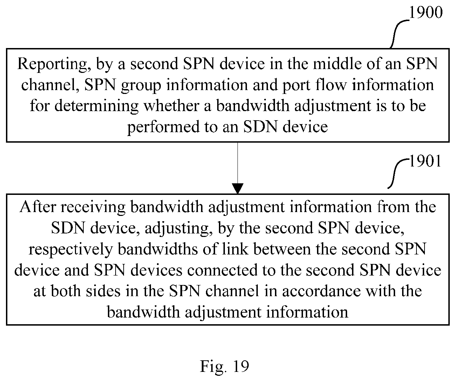

As shown in Fig. 19, the present disclosure provides in some embodiments a bandwidth adjustment method which includes:
Step 1900: reporting, by a second SPN device in the middle of an SPN channel, SPN group information and port flow information for determining whether a bandwidth adjustment is to be performed to an SDN device; and
Step 1901, after receiving bandwidth adjustment information from the SDN device, adjusting, by the second SPN device, respectively bandwidths of link between the second SPN device and SPN devices connected to the second SPN device at both sides in the SPN channel in accordance with the bandwidth adjustment information.

Optionally, the adjusting, by the second SPN device, the bandwidth of links between the second SPN device and the SPN devices connected to the second SPN device at both sides in the SPN channel in accordance with the bandwidth adjustment information includes: determining, by the second SPN device, slots to be adjusted in accordance with the bandwidth adjustment information and performing bandwidth adjustment negotiation with the SPN devices connected to the second SPN device at both sides in the SPN channel; and after determining that the bandwidth adjustment negotiation is successfully performed, adjusting, by the second SPN device, respectively the bandwidths of link between the second SPN device and the SPN device connected to the second SPN device at both sides in the SPN channel.

Optionally, the second SPN device performs the bandwidth adjustment negotiation with the SPN device connected to the second SPN device at one side in the SPN channel in following manner:
determining, by the second SPN device, adjusted working slots and free slots in accordance with the bandwidth adjustment information and transmitting slot information for determining the working slots and the free slots to the SPN device connected to the second SPN device at one side in the SPN channel; and receiving, by the second SPN device, slot information for determining the working slots and the free slots from the SPN device connected to the second SPN device at the one side in the SPN channel.

Optionally, the second SPN device adjusts the bandwidth of link between the second SPN device and the SPN device connected to the second SPN device at one side in the SPN channel in following manner:
adjusting, by the second SPN device, a bandwidth of link for transmission between the second SPN device and the SPN device connected to the second SPN device at one side in the SPN channel in accordance with the bandwidth adjustment information, and adjusting, by the second SPN device, a bandwidth of link for reception between the second SPN device and the SPN device connected to the second SPN device at one side in the SPN channel in accordance with the slot information for determining the working slots and the free slots received during the bandwidth adjustment negotiation from the SPN device connected to the second SPN device at the one side in the SPN channel.

Optionally, after adjusting, by the second SPN device, the bandwidths of link between the second SPN device and the SPN device connected to the second SPN device at both sides in the SPN channel in accordance with the bandwidth adjustment information, the bandwidth adjustment method further includes establishing, by the second SPN device, a slot exchanging relationship in accordance with the adjusted bandwidths of link.

Optionally, the SPN group information reported by the second SPN device includes the slot information for determining the working slots and the free slots.

The present disclosure has been described with reference to the flow charts and/or block diagrams of the method, apparatus (system) and/or computer program product. It should be appreciated that, computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, and/or any other programmable data processing apparatuses to create a machine, so that instructions executed by the processor of the computer or the other programmable data processing apparatuses create a method to achieve the functions/actions assigned in one or more work flows in the flow chart and/or one or more blocks in the block diagram.

Correspondingly, the present disclosure may be implemented in the form of hardware and/or software (including firmware, resident software or microcode). Further, the present disclosure may be provided in the form of a computer program product on a computer-usable or computer-readable storage medium, and the computer program product may include a computer-usable or computer-readable program code implemented in the medium, so as to be used by, or to be used in conjunction with, an instruction execution system. In the context, the computer-usable or computer-readable storage medium may be any medium which may include, store, communicate, transmit or deliver a program, so as to enable the program to be used by, or to be used in conjunction with, an instruction execution system, apparatus or device.

It will be apparent to those skilled in the art that various modifications and variations may be made to the present disclosure without departing from scope of the disclosure. Thus, it is intended that the present disclosure also encompass such modifications and variations as fall within the scope of the claims and their equivalents.

## Claims

1. A bandwidth adjustment method, **characterized in that** the method comprises:
determining (1700), by a Software Defined Network, SDN, device, whether Slicing Packet Network, SPN, devices in a same SPN channel need a bandwidth adjustment, in accordance with SPN group information and port flow information reported by the SPN devices; and
after determining that the bandwidth adjustment is needed, transmitting (1701), by the SDN device, bandwidth adjustment information to the SPN devices in the same SPN channel;
wherein the SPN group information includes at least one of: a group number, a physical map number, PHY MAP NUMBER, a calendar.

2. The bandwidth adjustment method according to claim 1, wherein the determining, by the SDN device, whether SPN devices in the same SPN channel need a bandwidth adjustment, in accordance with the SPN group information and the port flow information reported by the SPN devices comprises:
determining, by the SDN device, the SPN devices in the same SPN channel in accordance with the SPN group information reported by the SPN devices; and
determining, by the SDN device, whether the port flow information is within a to-be-adjusted bandwidth range, and if yes, determining that the bandwidth adjustment is needed; otherwise, determining that the bandwidth adjustment is not needed.

3. The bandwidth adjustment method according to claim 1 or 2, wherein after determining that the bandwidth adjustment is needed, and prior to transmitting, by the SDN device, the bandwidth adjustment information to the SPN devices in the same SPN channel, the bandwidth adjustment method further comprises:
after determining that the bandwidth adjustment is needed, determining, by the SDN device, a size of the bandwidth adjustment in accordance with a size relationship between the port flow information and thresholds of the to-be-adjusted bandwidth range; and
selecting, by the SDN device, slots to be adjusted in accordance with the determined size of the bandwidth adjustment as well as slot information for determining current working slots and free slots of the SPN devices in the SPN group information, and generating the bandwidth adjustment information in accordance with the selected slots.

4. A bandwidth adjustment method, **characterized in that** the method comprises:
reporting (1800), by a first SPN device at an end point of an SPN channel, SPN group information and port flow information for determining whether a bandwidth adjustment is to be performed to an SDN device; and
after receiving bandwidth adjustment information from the SDN device, adjusting (1801), by the first SPN device, a bandwidth of link between the first SPN device and an SPN device connected to the first SPN device in the SPN channel in accordance with the bandwidth adjustment information;
wherein the SPN group information includes at least one of: a group number, a physical map number, PHY MAP NUMBER, a calendar.

5. The bandwidth adjustment method according to claim 4, wherein the adjusting, by the first SPN device, the bandwidth of link between the first SPN device and the SPN device connected to the first SPN device in the SPN channel in accordance with the bandwidth adjustment information comprises:
determining, by the first SPN device, slots to be adjusted in accordance with the bandwidth adjustment information and performing bandwidth adjustment negotiation with the connected SPN device in the SPN channel; and
after determining that the bandwidth adjustment negotiation is successfully performed, adjusting, by the first SPN device, the bandwidth of link between the first SPN device and the connected SPN device in the SPN channel.

6. The bandwidth adjustment method according to claim 5, wherein the performing, by the first SPN device, the bandwidth adjustment negotiation with the SPN device connected to the bandwidth adjustment device in the SPN channel comprises:
determining, by the first SPN device, adjusted working slots and free slots in accordance with the bandwidth adjustment information, and transmitting slot information for determining the working slots and the free slots to the connected SPN device in the SPN channel; and
receiving, by the first SPN device, slot information for determining working slots and free slots from the connected SPN device in the SPN channel.

7. The bandwidth adjustment method according to any one of claims 4 to 6, wherein the adjusting, by the first SPN device, the bandwidth of link between the first SPN device and the SPN device connected to the first SPN device in the SPN channel in accordance with the bandwidth adjustment information comprises:
adjusting, by the first SPN device, a bandwidth of link for transmission between the first SPN device and the connected SPN device in the SPN channel in accordance with the bandwidth adjustment information, and adjusting a bandwidth of link for reception between the first SPN device and the connected SPN device in accordance with slot information received during bandwidth adjustment negotiation for determining working slots and free slots.

8. A bandwidth adjustment method, **characterized in that** the method comprises:
reporting (1900), by a second SPN device in the middle of an SPN channel, SPN group information and port flow information for determining whether a bandwidth adjustment is to be performed to an SDN device; and
after receiving bandwidth adjustment information from the SDN device, adjusting (1901), by the second SPN device, respectively bandwidths of link between the second SPN device and SPN devices connected to the second SPN device at both sides in the SPN channel in accordance with the bandwidth adjustment information;
wherein the SPN group information includes at least one of: a group number, a physical map number, PHY MAP NUMBER, a calendar.

9. The bandwidth adjustment method according to claim 8, wherein the adjusting, by the second SPN device, respectively the bandwidths of the link between the second SPN device and the SPN devices connected to the second SPN device at both sides in the SPN channel in accordance with the bandwidth adjustment information comprises:
determining, by the second SPN device, slots to be adjusted in accordance with the bandwidth adjustment information and performing bandwidth adjustment negotiation respectively with the SPN devices connected at both sides in the SPN channel; and
after determining that the bandwidth adjustment negotiation at both sides is successfully performed, adjusting, by the second SPN device, respectively the bandwidths of the link between the second SPN device and the SPN device connected at both sides in the SPN channel.

10. The bandwidth adjustment method according to claim 9, wherein the second SPN device performs the bandwidth adjustment negotiation with the SPN device connected to the second SPN device at one side in the SPN channel in following manner:
determining, by the second SPN device, adjusted working slots and free slots in accordance with the bandwidth adjustment information and transmitting slot information for determining the working slots and the free slots to the SPN device connected at the one side in the SPN channel; and
receiving, by the second SPN device, slot information for determining working slots and free slots from the SPN device connected at the one side in the SPN channel.

11. The bandwidth adjustment method according to claim 10, wherein the second SPN device adjusts a bandwidth of link between the second SPN device and the SPN device connected to the second SPN device at the one side in the SPN channel in following manner:
adjusting, by the second SPN device, a bandwidth of link for transmission between the second SPN device and the SPN device connected to the second SPN device at the one side in the SPN channel in accordance with the bandwidth adjustment information, and adjusting a bandwidth of link for reception between the second SPN device and the SPN device connected to the second SPN device at the one side in the SPN channel in accordance with slot information for determining the working slots and the free slots received during the bandwidth adjustment negotiation from the SPN device connected at the one side.

12. The bandwidth adjustment method according to claim 8, wherein after adjusting, by the second SPN device, the bandwidths of link between the second SPN device and the SPN devices connected to the second SPN device at both sides in the SPN channel in accordance with the bandwidth adjustment information, the bandwidth adjustment method further comprises:
establishing, by the second SPN device, a slot exchanging relationship in accordance with the adjusted bandwidths of link.

13. A bandwidth adjustment device, **characterized in that** the bandwidth adjustment device comprises a processor (800) and a transceiver (801), wherein the processor (800) is configured to:
determine whether SPN devices in a same SPN channel need a bandwidth adjustment, in accordance with SPN group information and port flow information reported by the SPN devices; and
after determining that the bandwidth adjustment is needed, transmit bandwidth adjustment information to the SPN devices in the same SPN channel;
wherein the SPN group information includes at least one of: a group number, a physical map number, PHY MAP NUMBER, a calendar.

14. A bandwidth adjustment device for use at one end point of an SPN channel, **characterized in that** the bandwidth adjustment device comprises a processor (900) and a transceiver (901), wherein the processor (900) is configured to:
report SPN group information and port flow information for determining whether a bandwidth adjustment is to be performed to an SDN device; and
after receiving bandwidth adjustment information from the SDN device, adjust a bandwidth of link between the bandwidth adjustment device and an SPN device connected to the bandwidth adjustment device in the SPN channel in accordance with the bandwidth adjustment information;
wherein the SPN group information includes at least one of: a group number, a physical map number, PHY MAP NUMBER, a calendar.

15. A bandwidth adjustment device for use in the middle of an SPN channel, **characterized in that** the bandwidth adjustment device comprises a processor (1000) and a transceiver (1001), wherein the processor (1000) is configured to:
report SPN group information and port flow information for determining whether a bandwidth adjustment is to be performed to an SDN device; and
after receiving bandwidth adjustment information from the SDN device, adjust respectively bandwidths of link between the bandwidth adjustment device and SPN devices connected to the bandwidth adjustment device at both sides in the SPN channel in accordance with the bandwidth adjustment information;
wherein the SPN group information includes at least one of: a group number, a physical map number, PHY MAP NUMBER, a calendar.

## Patentansprüche

1. Verfahren zur Bandbreitenanpassung, **dadurch gekennzeichnet, dass** das Verfahren umfasst:
Bestimmen (1700), durch eine Software Defined Network (SDN)-Vorrichtung, ob Slicing Packet Network (SPN)-Vorrichtungen in einem gleichen SPN-Kanal eine Bandbreitenanpassung benötigen, anhand von von den SPN-Vorrichtungen gemeldeter SPN-Gruppeninformation und Portflussinformation; und
nach dem Bestimmen, dass die Bandbreitenanpassung erforderlich ist, Senden (1701) von Bandbreitenanpassungsinformation durch die SDN-Vorrichtung an die SPN-Vorrichtungen im gleichen SPN-Kanal;
wobei die SPN-Gruppeninformation mindestens eines von einer Gruppennummer, einer physikalische Kartennummer, PHY MAP NUMBER, einem Kalender umfasst.

2. Bandbreitenanpassungsverfahren nach Anspruch 1, bei dem das Bestimmen, durch die SDN-Vorrichtung, ob SPN-Vorrichtungen im gleichen SPN-Kanal eine Bandbreitenanpassung benötigen, anhand der von den SPN-Vorrichtungen gemeldeten SPN-Gruppeninformation und Portflussinformation umfasst:
Bestimmen der SPN-Vorrichtungen im gleichen SPN-Kanal durch die SDN- Vorrichtung anhand der von den SPN- Vorrichtungen gemeldeten SPN-Gruppeninformation; und
Bestimmen, durch die SDN-Vorrichtung, ob die Portflussinformation innerhalb eines anzupassenden Bandbreitenbereichs liegt, und wenn ja, Bestimmen, dass die Bandbreitenanpassung erforderlich ist; andernfalls Bestimmen, dass die Bandbreitenanpassung nicht erforderlich ist.

3. Bandbreitenanpassungsverfahren nach Anspruch 1 oder 2, bei dem nach dem Bestimmen, dass die Bandbreitenanpassung erforderlich ist, und vor dem Senden der Bandbreitenanpassungsinformation durch die SDN-Vorrichtung an die SPN-Vorrichtungen im gleichen SPN-Kanal das Bandbreitenanpassungsverfahren ferner umfasst:
nach dem Bestimmen, dass die Bandbreitenanpassung erforderlich ist, Bestimmen einer Größe der Bandbreitenanpassung durch die SDN-Vorrichtung anhand einer Größenbeziehung zwischen der Portflussinformation und Schwellenwerten des anzupassenden Bandbreitenbereichs; und
Auswählen von anzupassenden Slots durch die SDN-Vorrichtung anhand der ermittelten Größe der Bandbreitenanpassung sowie von Slot-Information zum Bestimmen von aktuellen Arbeitsslots und freien Slots der SPN-Vorrichtungen in der SPN-Gruppeninformation und Erzeugen der Bandbreitenanpassungsinformation anhand der ausgewählten Slots.

4. Bandbreitenanpassungsverfahren, **dadurch gekennzeichnet, dass** das Verfahren umfasst:
Melden (1800) von SPN-Gruppeninformation und Portflussinformation durch eine erste SPN-Vorrichtung an einem Endpunkt eines SPN-Kanals, um zu bestimmen, ob eine Bandbreitenanpassung an einer SDN-Vorrichtung durchgeführt werden soll; und
nach dem Empfang von Bandbreitenanpassungsinformation von der SDN-Vorrichtung, Anpassen (1801) einer Bandbreite einer Verbindung zwischen der ersten SPN-Vorrichtung und einer SPN-Vorrichtung, die mit der ersten SPN-Vorrichtung in dem SPN-Kanal verbunden ist, durch die erste SPN-Vorrichtung anhand der Bandbreitenanpassungsinformation;
wobei die SPN-Gruppeninformation mindestens eines von einer Gruppennummer, einer physikalischen Kartennummer, PHY MAP NUMBER, einem Kalender umfasst.

5. Bandbreitenanpassungsverfahren nach Anspruch 4, bei dem das Anpassen der Bandbreite der Verbindung zwischen der ersten SPN-Vorrichtung und der mit der ersten SPN-Vorrichtung im SPN-Kanal verbundenen SPN-Vorrichtung anhand der Bandbreitenanpassungsinformation durch die erste SPN-Vorrichtung umfasst:
Bestimmen von anzupassenden Slots durch die erste SPN-Vorrichtung anhand der Bandbreitenanpassungsinformation und Durchführen einer Bandbreitenanpassungsverhandlung mit der im SPN-Kanal verbundenen SPN-Vorrichtung; und
nach Feststellen, dass die Bandbreitenanpassungsverhandlung erfolgreich durchgeführt wurde, Anpassen der Bandbreite der Verbindung zwischen der ersten SPN-Vorrichtung und der im SPN-Kanal verbundenen SPN-Vorrichtung durch die erste SPN-Vorrichtung.

6. Bandbreitenanpassungsverfahren nach Anspruch 5, bei dem das Durchführen der Bandbreitenanpassungsverhandlung mit dem mit der Bandbreitenanpassungsvorrichtung verbundenen SPN-Gerät durch das erste SPN-Gerät umfasst:
Bestimmen von angepassten Arbeitsslots und freien Slots anhand der Bandbreitenanpassungsinformation durch die erste SPN-Vorrichtung und Senden von Slot-Information zum Bestimmen der Arbeitsslots und der freien Slots an die im SPN-Kanal verbundene SPN-Vorrichtung; und
Empfangen von Slot-Information zum Bestimmen von Arbeitsslots und freien Slots von der im SPN-Kanal verbundenen SPN-Vorrichtung durch die erste SPN-Vorrichtung.

7. Bandbreitenanpassungsverfahren nach einem der Ansprüche 4 bis 6, bei dem das Anpassen der Bandbreite der Verbindung zwischen der ersten SPN-Vorrichtung und der mit der ersten SPN-Vorrichtung im SPN-Kanal verbundenen SPN-Vorrichtung gemäß der Bandbreitenanpassungsinformation durch die erste SPN-Vorrichtung umfasst:
Anpassen einer Bandbreite einer Verbindung für die Übertragung zwischen der ersten SPN-Vorrichtung und der verbundenen SPN-Vorrichtung im SPN-Kanal anhand der Bandbreitenanpassungsinformation, und Anpassen einer Bandbreite einer Verbindung für den Empfang zwischen der ersten SPN-Vorrichtung und der verbundenen SPN-Vorrichtung anhand von während der Bandbreitenanpassungsverhandlung zum Bestimmen von Arbeitsslots und freien Slots empfangener Slot-Information.

8. Bandbreitenanpassungsverfahren, **dadurch gekennzeichnet, dass** das Verfahren umfasst:
Melden (1900) von SPN-Gruppeninformation und Portflussinformation durch eine zweite SPN-Vorrichtung in der Mitte eines SPN-Kanals, um zu bestimmen, ob eine Bandbreitenanpassung an einer SDN-Vorrichtung durchgeführt werden soll; und
nach dem Empfang von Bandbreitenanpassungsinformation von der SDN-Vorrichtung, Anpassen (1901) von Bandbreiten der Verbindung zwischen der zweiten SPN-Vorrichtung und mit der zweiten SPN-Vorrichtung auf beiden Seiten im SPN-Kanal verbundenen SPN-Vorrichtungen anhand der Bandbreitenanpassungsinformation durch die zweite SPN-Vorrichtung;
wobei die SPN-Gruppeninformation mindestens eines von einer Gruppennummer, einer physikalischen Kartennummer, PHY MAP NUMBER, einem Kalender umfasst.

9. Bandbreitenanpassungsverfahren nach Anspruch 8, bei dem das Anpassen der Bandbreiten der Verbindung zwischen der zweiten SPN-Vorrichtung und den mit der zweiten SPN-Vorrichtung verbundenen SPN-Vorrichtungen auf beiden Seiten im SPN-Kanal anhand der Bandbreitenanpassungsinformation durch die zweite SPN-Vorrichtung umfasst:
Bestimmen von anzupassenden Slots durch die zweite SPN-Vorrichtung anhand der Bandbreitenanpassungsinformation und Durchführen einer Bandbreitenanpassungsverhandlung mit den an beiden Seiten im SPN-Kanal verbundenen SPN-Vorrichtungen; und
nach Feststellen, dass die Bandbreitenanpassungsverhandlung an beiden Seiten erfolgreich durchgeführt wurde, Anpassen der Bandbreiten der Verbindung zwischen der zweiten SPN-Vorrichtung und der an beiden Seiten im SPN-Kanal verbundenen SPN-Vorrichtung durch die zweite SPN-Vorrichtung.

10. Bandbreitenanpassungsverfahren nach Anspruch 9, bei dem die zweite SPN-Vorrichtung die Bandbreitenanpassungsverhandlung mit der im SPN-Kanal auf einer Seite verbundenen zweiten SPN-Vorrichtung auf folgende Weise durchführt:
Bestimmen von angepassten Arbeitsslots und freien Slots durch die zweite SPN-Vorrichtung anhand der Bandbreitenanpassungsinformation und Senden von Slot-Information zum Bestimmen der Arbeitsslots und der freien Slots an die auf der einen Seite im SPN-Kanal verbundene SPN-Vorrichtung; und
Empfangen der Slot-Information zum Bestimmen der Arbeitsslots und der freien Slots durch die zweite SPN-Vorrichtung von der auf der einen Seite im SPN-Kanal verbundenen SPN-Vorrichtung.

11. Bandbreitenanpassungsverfahren nach Anspruch 10, bei dem die zweite SPN-Vorrichtung eine Bandbreite einer Verbindung zwischen der zweiten SPN-Vorrichtung und der mit der zweiten SPN-Vorrichtung auf der einen Seite im SPN-Kanal verbundenen SPN-Vorrichtung auf folgende Weise anpasst:
Anpassen einer Bandbreite einer Verbindung für die Übertragung zwischen der zweiten SPN-Vorrichtung und der mit der zweiten SPN-Vorrichtung auf der einen Seite im SPN-Kanal verbundenen SPN-Vorrichtung anhand der Bandbreitenanpassungsinformation durch die zweite SPN-Vorrichtung, und Einstellen einer Bandbreite der Verbindung für den Empfang zwischen der zweiten SPN-Vorrichtung und der mit der zweiten SPN-Vorrichtung auf der einen Seite im SPN-Kanal verbundenen SPN-Vorrichtung anhand von während der Bandbreiteneinstellungsverhandlung von der auf der einen Seite verbundenen SPN-Vorrichtung empfangener Slot-Information zum Bestimmen der Arbeitsslots und der freien Slots.

12. Bandbreitenanpassungsverfahren nach Anspruch 8, bei dem nach dem Anpassen der Bandbreiten der Verbindung zwischen der zweiten SPN-Vorrichtung und den mit der zweiten SPN-Vorrichtung auf beiden Seiten im SPN-Kanal verbundenen SPN-Vorrichtungen anhand der Bandbreitenanpassungsinformation durch die zweite SPN-Vorrichtung das Bandbreitenanpassungsverfahren ferner umfasst:
Einrichten einer Slot-Austauschbeziehung durch die zweite SPN-Vorrichtung anhand der angepassten Bandbreiten der Verbindung.

13. Bandbreitenanpassungsvorrichtung, **dadurch gekennzeichnet, dass** die Bandbreitenanpassungsvorrichtung einen Prozessor (800) und einen Transceiver (801) umfasst, wobei der Prozessor (800) konfiguriert ist zum
Bestimmen, ob SPN-Vorrichtungen in einem gleichen SPN-Kanal eine Bandbreitenanpassung benötigen, anhand von von den SPN-Vorrichtungen gemeldeter SPN-Gruppeninformation und Portflussinformation; und
nach dem Bestimmen, dass die Bandbreitenanpassung erforderlich ist, Senden von Bandbreitenanpassungsinformation an die SPN-Vorrichtungen im gleichen SPN-Kanal;
wobei die SPN-Gruppeninformation mindestens eines von einer Gruppennummer, einer physikalischen Kartennummer, PHY MAP NUMBER, einem Kalender umfasst.

14. Bandbreitenanpassungsvorrichtung zur Verwendung an einem Endpunkt eines SPN-Kanals, **dadurch gekennzeichnet, dass** die Bandbreitenanpassungsvorrichtung einen Prozessor (900) und einen Transceiver (901) umfasst, wobei der Prozessor (900) konfiguriert ist zum:
Melden von SPN-Gruppeninformation und Portflussinformation, um zu bestimmen, ob eine Bandbreitenanpassung an einer SDN-Vorrichtung durchgeführt werden soll; und
nach dem Empfang von Bandbreitenanpassungsinformation von der SDN-Vorrichtung, Anpassen einer Bandbreite einer Verbindung zwischen der Bandbreitenanpassungsvorrichtung und einer mit der Bandbreitenanpassungsvorrichtung in dem SPN-Kanal verbundenen SPN-Vorrichtung anhand der Bandbreitenanpassungsinformation;
wobei die SPN-Gruppeninformation mindestens eines von einer Gruppennummer, einer physikalischen Kartennummer, PHY MAP NUMBER, einem Kalender umfasst.

15. Bandbreitenanpassungsvorrichtung zur Verwendung in der Mitte eines SPN-Kanals, **dadurch gekennzeichnet, dass** die Bandbreitenanpassungsvorrichtung einen Prozessor (1000) und einen Transceiver (1001) umfasst, wobei der Prozessor (1000) konfiguriert ist zum:
Melden von SPN-Gruppeninformation und Portflussinformation, um zu bestimmen, ob eine Bandbreitenanpassung an einer SDN-Vorrichtung durchgeführt werden soll; und
nach dem Empfang von Bandbreitenanpassungsinformationen von der SDN-Vorrichtung, Anpassen von Bandbreiten der Verbindung zwischen der Bandbreitenanpassungsvorrichtung und den mit der Bandbreitenanpassungsvorrichtung auf beiden Seiten im SPN-Kanal verbundenen SPN-Vorrichtungen anhand der Bandbreitenanpassungsinformation;
wobei die SPN-Gruppeninformationen mindestens eines von einer Gruppennummer, einer physikalischen Kartennummer, PHY MAP NUMBER, einem Kalender umfasst.

## Revendications

1. Procédé d'ajustement de bande passante, **caractérisé en ce que** le procédé comprend :
la détermination (1700), par un dispositif de réseau défini par logiciel, SDN, si oui ou non des dispositifs de découpage de réseau par paquets, SPN, dans un même canal SPN nécessitent un ajustement de bande passante, conformément à des informations de groupe SPN et à des informations de flux de port rapportées par les dispositifs SPN ; et
après avoir déterminé que l'ajustement de bande passante est nécessaire, la transmission (1701), par le dispositif SDN, d'informations d'ajustement de bande passante aux dispositifs SPN dans le même canal SPN ;
dans lequel les informations de groupe SPN incluent au moins un élément parmi : un numéro de groupe, un numéro de carte physique, un NUMÉRO DE CARTE PHY, un calendrier.

2. Procédé d'ajustement de bande passante selon la revendication 1, dans lequel la détermination, par le dispositif SDN, si oui ou non des dispositifs SPN dans le même canal SPN nécessitent un ajustement de bande passante, conformément aux informations de groupe SPN et aux informations de flux de port rapportées par les dispositifs SPN comprend :
la détermination, par le dispositif SDN, des dispositifs SPN dans le même canal SPN conformément aux informations de groupe SPN rapportées par les dispositifs SPN ; et
la détermination, par le dispositif SDN, si oui ou non les informations de flux de port se trouvent dans une plage de bandes passantes devant être ajustées, et si oui, la détermination que l'ajustement de bande passante est nécessaire ; sinon, la détermination que l'ajustement de bande passante n'est pas nécessaire.

3. Procédé d'ajustement de bande passante selon la revendication 1 ou 2, dans lequel après avoir déterminé que l'ajustement de bande passante est nécessaire, et avant de transmettre, par le dispositif SDN, les informations d'ajustement de bande passante aux dispositifs SPN dans le même canal SPN, le procédé d'ajustement de bande passante comprend en outre :
après avoir déterminé que l'ajustement de la bande passante est nécessaire, la détermination, par le dispositif SDN, d'une taille du réglage de bande passante conformément à une relation de taille entre les informations de flux de port et des seuils de la plage de bandes passantes devant être ajustées ; et
la sélection, par le dispositif SDN, de créneaux devant être ajustés conformément à la taille déterminée du réglage de bande passante ainsi que d'informations de créneau permettant de déterminer des créneaux de travail et des créneaux libres actuels des dispositifs SPN dans les informations de groupe SPN, et la génération des informations d'ajustement de bande passante conformément aux créneaux sélectionnés.

4. Procédé d'ajustement de bande passante, **caractérisé en ce que** le procédé comprend :
le rapport (1800), par un premier dispositif SPN au niveau d'un point d'extrémité d'un canal SPN, d'informations de groupe SPN et d'informations de flux de port permettant de déterminer si oui ou non un ajustement de bande passante doit être réalisé sur un dispositif SDN ; et
après la réception d'informations d'ajustement de bande passante du dispositif SDN, l'ajustement (1801), par le premier dispositif SPN, d'une bande passante de liaison entre le premier dispositif SPN et un dispositif SPN connecté au premier dispositif SPN dans le canal SPN conformément aux informations d'ajustement de bande passante ;
dans lequel les informations de groupe SPN incluent au moins un élément parmi : un numéro de groupe, un numéro de carte physique, un NUMÉRO DE CARTE PHY, un calendrier.

5. Procédé d'ajustement de bande passante selon la revendication 4, dans lequel l'ajustement, par le premier dispositif SPN, de la bande passante de liaison entre le premier dispositif SPN et le dispositif SPN connecté au premier dispositif SPN dans le canal SPN conformément aux informations d'ajustement de bande passante comprend :
la détermination, par le premier dispositif SPN, de créneaux devant être ajustés conformément aux informations d'ajustement de bande passante et la réalisation d'une négociation d'ajustement de bande passante avec le dispositif SPN connecté dans le canal SPN ; et
après avoir déterminé que la négociation d'ajustement de bande passante est réalisée avec succès, l'ajustement, par le premier dispositif SPN, de la bande passante de liaison entre le premier dispositif SPN et le dispositif SPN connecté dans le canal SPN.

6. Procédé d'ajustement de bande passante selon la revendication 5, dans lequel la réalisation, par le premier dispositif SPN, de la négociation d'ajustement de bande passante avec le dispositif SPN connecté au dispositif d'ajustement de bande passante dans le canal SPN comprend :
la détermination, par le premier dispositif SPN, de créneaux de travail et de créneaux libres ajustés conformément aux informations d'ajustement de bande passante, et la transmission d'informations de créneau permettant de déterminer les créneaux de travail et les créneaux libres au dispositif SPN connecté dans le canal SPN ; et
la réception, par le premier dispositif SPN, d'informations de créneau permettant de déterminer des créneaux de travail et des créneaux libres à partir du dispositif SPN connecté dans le canal SPN.

7. Procédé d'ajustement de bande passante selon l'une quelconque des revendications 4 à 6, dans lequel l'ajustement, par le premier dispositif SPN, de la bande passante de liaison entre le premier dispositif SPN et le dispositif SPN connecté au premier dispositif SPN dans le canal SPN conformément aux informations d'ajustement de bande passante comprend :
l'ajustement, par le premier dispositif SPN, d'une bande passante de liaison pour une transmission entre le premier dispositif SPN et le dispositif SPN connecté dans le canal SPN conformément aux informations d'ajustement de bande passante, et l'ajustement d'une bande passante de liaison pour une réception entre le premier dispositif SPN et le dispositif SPN connecté conformément aux informations de créneau reçues pendant une négociation d'ajustement de bande passante permettant de déterminer des créneaux de travail et des créneaux libres.

8. Procédé d'ajustement de bande passante, **caractérisé en ce que** le procédé comprend :
le rapport (1900), par un second dispositif SPN au milieu d'un canal SPN, d'informations de groupe SPN et d'informations de flux de port permettant de déterminer si oui ou non un réglage de bande passante doit être réalisé sur un dispositif SDN ; et
après la réception d'informations d'ajustement de bande passante à partir du dispositif SDN, l'ajustement (1901), par le second dispositif SPN, respectivement de bandes passantes de liaison entre le second dispositif SPN et des dispositifs SPN connectés au second dispositif SPN des deux côtés dans le canal SPN conformément aux informations d'ajustement de bande passante ;
dans lequel les informations de groupe SPN incluent au moins un élément parmi : un numéro de groupe, un numéro de carte physique, un NUMÉRO DE CARTE PHY, un calendrier.

9. Procédé d'ajustement de bande passante selon la revendication 8, dans lequel l'ajustement, par le second dispositif SPN, respectivement des bandes passantes de la liaison entre le second dispositif SPN et les dispositifs SPN connectés au second dispositif SPN des deux côtés dans le canal SPN conformément aux informations d'ajustement de bande passante comprend :
la détermination, par le second dispositif SPN, de créneaux devant être ajustés conformément aux informations d'ajustement de bande passante et la réalisation d'une négociation d'ajustement de bande passante respectivement avec les dispositifs SPN connectés des deux côtés dans le canal SPN ; et
après avoir déterminé que la négociation d'ajustement de bande passante des deux côtés est réalisée avec succès, l'ajustement, par le second dispositif SPN, respectivement des bandes passantes de la liaison entre le second dispositif SPN et le dispositif SPN connecté des deux côtés dans le canal SPN.

10. Procédé d'ajustement de bande passante selon la revendication 9, dans lequel le second dispositif SPN réalise la négociation d'ajustement de bande passante avec le dispositif SPN connecté au second dispositif SPN d'un côté dans le canal SPN de la manière suivante :
la détermination, par le second dispositif SPN, de créneaux de travail et de créneaux libres réglés conformément aux informations d'ajustement de bande passante et la transmission d'informations de créneau permettant de déterminer les créneaux de travail et les créneaux libres au dispositif SPN connecté audit côté dans le canal SPN ; et
la réception, par le second dispositif SPN, d'informations de créneau permettant de déterminer des créneaux de travail et des créneaux libres à partir du dispositif SPN connecté dudit côté dans le canal SPN.

11. Procédé d'ajustement de bande passante selon la revendication 10, dans lequel le second dispositif SPN ajuste une bande passante de liaison entre le second dispositif SPN et le dispositif SPN connecté au second dispositif SPN dudit côté du canal SPN de la manière suivante :
l'ajustement, par le second dispositif SPN, d'une bande passante de liaison pour une transmission entre le second dispositif SPN et le dispositif SPN connecté au second dispositif SPN dudit côté dans le canal SPN conformément aux informations d'ajustement de bande passante, et l'ajustement d'une bande passante de liaison pour une réception entre le second dispositif SPN et le dispositif SPN connecté au second dispositif SPN dudit côté dans le canal SPN conformément aux informations de créneau pour déterminer les créneaux de travail et les créneaux libres reçus pendant la négociation d'ajustement de bande passante à partir du dispositif SPN connecté dudit côté.

12. Procédé d'ajustement de bande passante selon la revendication 8, dans lequel après un ajustement, par le second dispositif SPN, des bandes passantes de liaison entre le second dispositif SPN et les dispositifs SPN connectés au second dispositif SPN des deux côtés dans le canal SPN conformément aux informations d'ajustement de bande passante, le procédé d'ajustement de bande passante comprend en outre :
l'établissement, par le second dispositif SPN, d'une relation d'échange de créneaux conformément aux bandes passantes de liaison ajustées.

13. Dispositif d'ajustement de bande passante, **caractérisé en ce que** le dispositif d'ajustement de bande passante comprend un processeur (800) et un émetteur-récepteur (801), dans lequel le processeur (800) est configuré pour :
déterminer si oui ou non des dispositifs SPN dans un même canal SPN nécessitent un ajustement de bande passante, conformément aux informations de groupe SPN et aux informations de flux de port rapportées par les dispositifs SPN ; et
après avoir déterminé que l'ajustement de bande passante est nécessaire, transmettre les informations d'ajustement de bande passante aux dispositifs SPN dans le même canal SPN ;
dans lequel les informations de groupe SPN incluent au moins un élément parmi : un numéro de groupe, un numéro de carte physique, un NUMÉRO DE CARTE PHY, un calendrier.

14. Dispositif d'ajustement de bande passante destiné à être utilisé au niveau d'un point d'extrémité d'un canal SPN, **caractérisé en ce que** le dispositif d'ajustement de bande passante comprend un processeur (900) et un émetteur-récepteur (901), dans lequel le processeur (900) est configuré pour :
rapporter des informations de groupe SPN et des informations de flux de port permettant de déterminer si oui ou non un ajustement de bande passante doit être réalisé sur un dispositif SDN ; et
après la réception d'informations d'ajustement de bande passante à partir du dispositif SDN, ajuster une bande passante de liaison entre le dispositif d'ajustement de bande passante et un dispositif SPN connecté au dispositif d'ajustement de bande passante dans le canal SPN conformément aux informations d'ajustement de bande passante ;
dans lequel les informations de groupe SPN incluent au moins un élément parmi : un numéro de groupe, un numéro de carte physique, un NUMÉRO DE CARTE PHY, un calendrier.

15. Dispositif d'ajustement de bande passante destiné à être utilisé au milieu d'un canal SPN, **caractérisé en ce que** le dispositif d'ajustement de bande passante comprend un processeur (1000) et un émetteur-récepteur (1001), dans lequel le processeur (1000) est configuré pour :
rapporter des informations de groupe SPN et des informations de flux de port permettant de déterminer si oui ou non un ajustement de bande passante doit être réalisé sur un dispositif SDN ; et
après la réception d'informations d'ajustement de bande passante à partir du dispositif SDN, l'ajustement respectivement de bandes passantes de liaison entre le dispositif d'ajustement de bande passante et des dispositifs SPN connectés au dispositif d'ajustement de bande passante des deux côtés dans le canal SPN conformément aux informations d'ajustement de bande passante ;
dans lequel les informations de groupe SPN incluent au moins un élément parmi : un numéro de groupe, un numéro de carte physique, un NUMÉRO DE CARTE PHY, un calendrier.
